# EUROPEAN PATENT APPLICATION

(11) **EP 2 698 697 A2**
(43) Date of publication of application: **19.02.2014**
(21) Application number: 13179528.8
(22) Date of filing: 07.08.2013
(51) Int. Cl.: G06F 3/0485

(54) **Method of searching for playback location of multimedia application and electronic device thereof**

(30) Priority: 13.08.2012 KR 20120088374
(71) Applicant: Samsung Electronics Co., Ltd, Gyeonggi-do 443-742 (KR)
(72) Inventor: Kim, Hyun-Woo, Gyeonggi-do (KR); Lee, Heon-Yong, Gyeonggi-do (KR)
(74) Representative: Gover, Richard Paul

(57) **Abstract**

An electronic device implements a method of searching for a location of a multimedia application of an electronic device. The method includes displaying a location search bar to search for a playback location of the multiple application, detecting a drag in a direction orthogonal to the location search bar, and displaying the location search bar corresponding to a duration in which the drag is detected in a full duration of the location search bar by changing a shape of the location search bar.

## Description

### TECHNICAL FIELD

The present disclosure relates to an electronic device. More particularly, the present disclosure relates to a method and apparatus for searching for a location of a multimedia application.

### BACKGROUND

With the rapid development of electronic devices (for example, a smart phone, a tablet Personal Computer (PC), and the like), an electronic device capable of wireless voice telephony and information exchange has become a part of everyday life. The electronic device was recognized as a portable device capable of simple wireless telephony when it was first distributed. However, with the introduction of a related techniques and wireless Internet, the electronic device is developing into a multimedia device for performing functions such as scheduling, games, remote controls, image capturing, projectors, and the like.

In particular, a recently launched electronic device provides multimedia applications such as a music application, a video application, and the like. In general, when the multimedia application is executed, the electronic device provides a popup and menu capable of controlling a playback location of contents played back in the multimedia application (hereinafter, such a location is called an 'application playback location'). Therefore, a user can move the playback location of the multimedia application to a desired location by using the popup and the menu according to a user control. In particular, an electronic device equipped with a touch screen, such as a smart phone, provides a location search bar with a fixed length to move a playback location according to a user touch when a multimedia application is performed, so that the user can control the playback location by using the user touch. However, it is inconvenient for the user to correctly move the playback location of the multimedia application to the desired location since the longer the playback time of contents currently being played back by the multimedia application, the longer the time period assigned to the location search bar with the fixed length. Accordingly, there is a need to provide a method in which the user can easily move the playback location of the multimedia application to the desired playback location in the electronic device.

### SUMMARY

To address the above-discussed deficiencies, embodiments of the present disclosure include a method and an apparatus for accurately moving a playback location of a multimedia application in an electronic device.

Certain embodiments of the present disclosure include a method and apparatus for accurately moving a playback location of a multimedia application by using multiple touches in an electronic device.

Certain embodiments of the present disclosure include a method and apparatus for changing a shape of a location search bar of a multimedia application in an electronic device.

Certain embodiments of the present disclosure include a method and apparatus for changing a search speed of a multimedia application in an electronic device.

Certain embodiments of the present disclosure include a method and apparatus for changing a search time of a multimedia application in an electronic device.

Certain embodiments of the present disclosure include a method of searching for a location of a multimedia application of an electronic device. The method includes displaying a location search bar to search for a playback location of the multiple application, detecting a drag in a direction orthogonal to the location search bar, and displaying the location search bar corresponding to a duration in which the drag is detected in a full duration of the location search bar by changing a shape of the location search bar.

Certain embodiments of the present disclosure include a method of searching for a location of a multimedia application in an electronic device. The method includes displaying a location search bar to search for a playback location of the multiple application, displaying a playback control item for controlling at least one of a speed and a time which are used to search for the playback location, detecting a touch on a control item for the multimedia application, detecting a gesture for moving the location search pointer in a state of maintaining the detected touch, and moving the search pointer according to the touched control item and the detected gesture.

Certain embodiments of the present disclosure include an electronic device for searching for a location of a multimedia application. The electronic device includes one or more processors, a touch sensing display, a memory, and one or more programs stored in the memory and configured to be executed by the one or more processors, wherein the program includes an instruction for displaying a location search bar to search for a playback location of the multiple application, for detecting a drag in a direction orthogonal to the location search bar, and for displaying the location search bar corresponding to a duration in which the drag is detected in a full duration of the location search bar by changing a shape of the location search bar.

Certain embodiments of the present disclosure include an electronic device for searching for a location of a multimedia application. The electronic device includes one or more processors, a touch sensing display, a memory, and one or more programs stored in the memory and configured to be executed by the one or more processors, wherein the program includes an instruction for displaying a location search bar to search for a playback location of the multiple application, for displaying a playback control item for controlling at least one of a speed and a time which are used to search for a playback location of the multimedia application, for detecting a touch on a control item for the multimedia application, for detecting a gesture for moving the location search pointer in a state of maintaining the detected touch, and for moving the search pointer according to the touched control item and the detected gesture.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1A illustrates a block diagram of an electronic device for accurately moving a playback location of a multimedia application according to embodiments of the present disclosure;

FIG. 1B illustrates a processor of an electronic device for accurately moving a playback location of a multimedia application according to embodiments of the present disclosure;

FIG. 2A illustrates a process of changing a location search bar of a multimedia application in an electronic device according to embodiments of the present disclosure;

FIG. 2B illustrates an element for changing a location search bar of a multimedia application in an electronic device according to embodiments of the present disclosure;

FIGS. 3A and 3B illustrate an example of changing a shape of a location search bar on the basis of a drag in a direction orthogonal to the location search bar in an electronic device according to embodiments of the present disclosure;

FIG. 4A illustrates a process of moving a playback location of a multimedia application by using multiple touches in an electronic device according to embodiments of the present disclosure;

FIG. 4B illustrates an element for moving a playback location of a multimedia application by using multiple touches in an electronic device according to embodiments of the present disclosure;

FIG. 5 illustrates an example of displaying a playback control item in an electronic device according to embodiments of the present disclosure;

FIGS. 6A and 6B illustrate a process of moving a playback location by changing a shape of a specific duration of a location search bar in an electronic device according to embodiments of the present disclosure;

FIG. 6C and 6D illustrates a search time changed depending on a drag length in an electronic device according to embodiments of the present disclosure;

FIG. 6E illustrates an example of moving a playback location in a backward direction by changing a shape of a location search bar in an electronic device according to embodiments of the present disclosure;

FIG. 6F illustrates an example of moving a playback location in a forward direction by changing a shape of a location search bar in an electronic device according to embodiments of the present disclosure;

FIG. 7A and 7B illustrate a process of moving a playback location by changing a shape of a specific duration of a location search bar in an electronic device according to embodiments of the present disclosure;

FIG. 7C and D illustrates a search time changed depending on a drag length in an electronic device according to embodiments of the present disclosure;

FIG. 7E illustrates an example of moving a playback location in a backward direction by changing a shape of a location search bar in an electronic device according to embodiments of the present disclosure;

FIG. 7F illustrates an example of moving a playback location in a forward direction by changing a shape of a location search bar in an electronic device according to embodiments of the present disclosure;

FIG. 8A illustrates a process of moving a playback location of a multimedia application by using a playback control item in an electronic device according to embodiments of the present disclosure;

FIG. 8B illustrates an example of displaying a playback control item in an electronic device according to embodiments of the present disclosure;

FIG. 8C illustrates an example of moving a playback location in a backward direction by using a playback control item in an electronic device according to embodiments of the present disclosure;

FIG. 8D illustrates an example of moving a playback location in a forward direction by using a playback control item in an electronic device according to embodiments of the present disclosure;

FIG. 9A and FIG. 9B illustrate a process of moving a playback location by changing a shape of a location search bar and by using a search speed control item in an electronic device according to embodiments of the present disclosure;

FIG. 9C illustrates an example of displaying a search speed control item and a changed shape of a location search bar in an electronic device according to embodiments of the present disclosure;

FIG. 9D illustrates an example of moving a playback location in a backward direction by changing a shape of a location search bar and by using a search speed control item in an electronic device according to embodiments of the present disclosure;

FIG. 9E illustrates an example of moving a playback location in a forward direction by changing a shape of a location search bar and by using a search speed control item in an electronic device according to embodiments of the present disclosure;

FIG. 10A and FIG. 10B illustrate a process of moving a playback location by changing a shape of a location search bar and by using a search speed control item in an electronic device according to embodiments of the present disclosure;

FIG. 10C illustrates an example of displaying a search speed control item and a changed shape of a location search bar in an electronic device according to embodiments of the present disclosure;

FIG. 10D illustrates an example of allocating a time on the basis of a search time control item touched in a duration in which a location search bar is changed in an electronic device according to embodiments of the present disclosure;

FIG. 11 illustrates an example of changing a location search bar by sensing a drag which is moved by a distance greater than or equal to a threshold distance in an electronic device according to embodiments of the present disclosure;

FIG. 12 illustrates an example of changing and displaying a location search bar when a touch on the location search bar is maintained for a specific time period in an electronic device according to embodiments of the present disclosure; and

FIG. 13 illustrates an example of changing a shape and length of a location search bar by a touch during a specific time period in an electronic device according to embodiments of the present disclosure.

### DETAILED DESCRIPTION

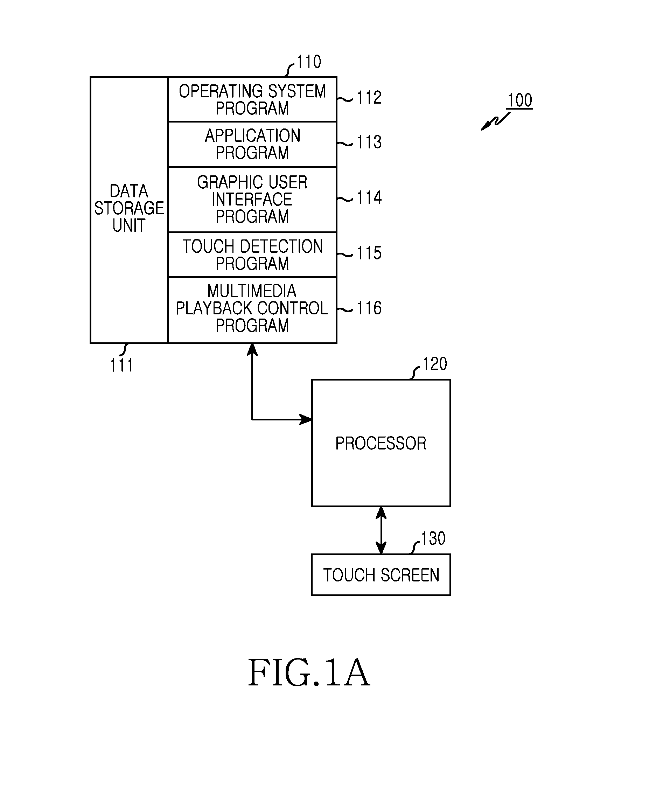

FIGURES 1A through 13, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic communication device. Embodiments of the present disclosurewill be described herein below with reference to the accompanying drawings. In the following description, well-known functions or constructions are not described in detail as they would obscure the disclosurein unnecessary detail. Also, the terms used herein are defined according to the functions of the present disclosure. Thus, the terms may vary depending on user or operator intention and usage. That is, the terms used herein are to be understood based on the descriptions made herein.

An electronic device described hereinafter is a device that supports touch input, such as a mobile communication terminal, a smart phone, a tablet Personal Computer (PC), a digital camera, an Motion Picture Experts Group Layer 3 (MP3) player, a navigator, a laptop, a net-book, a computer, a television set, a refrigerator, an air conditioner, etc.

FIG. 1A illustrates a block diagram of an electronic device for accurately moving a playback location of a multimedia application according to embodiments of the present disclosure.

Referring to FIG. 1A, an electronic device 100 includes a memory 110, a processor 120, and a touch screen 130. Each of the memory 110 and the processor 120 can be plural in number.

The memory 110 includes a data storage unit 111, an operating system program 112, an application program 113, a graphic user interface program 114, a touch detection program 115, a multimedia playback control program 116, and the like. In addition, since the program which is a software component can be expressed as a set of instructions, the program can also be expressed as an instruction set. The program is also expressed as a module.

The memory 110 can store one or more programs including instructions for performing the embodiments of the present disclosure.

The data storage unit 111 stores data generated while performing a function corresponding to the program stored in the memory 110. The data storage unit 111 of the present disclosurecan store related information for setting a search speed and a search time of a multimedia application. Further, the data storage unit 111 can store a touch duration time for displaying a playback control item of the multimedia application. In this case, the playback control item implies an item for controlling the search speed and the search time of the multimedia application. For example, the data storage unit 111 can store that a time for maintaining a touch to display an item for controlling a search speed of a multimedia file is 1 second. In addition, the data storage unit 111 can store information on a length and shape of a location search bar to be changed, for each drag length or touch mechanism.

The operating system program 112 (e.g., a built-in operating system such as WINDOWS, LINUX, Darwin, RTXC, UNIX, OS X, or VxWorks®) includes various software components for controlling a general system operation. For example, the control of the general system operation includes memory management and control, storage hardware (device) control and management, power control and management, etc. The operating system program 112 performs a function for facilitating communication between various hardware components (devices) and software components (programs).

The application program 113 includes a browser, an email, a message, word processing, an address book, a widget, a Digital Right Management (DRM), voice recognition, voice recording, a position determining function, a location based service, a video and music player, etc.

The graphic user interface program 114 includes at least one software component for providing a graphic-based user interface between the user and the electronic device 100. That is, the graphic user interface program 114 includes at least one software component for displaying user interface information on the touch screen 130. According to the present disclosure, the graphic user interface program 114 includes an instruction for displaying a location search bar and a playback control item of the multimedia application on the touch screen 130, and includes an instruction for displaying the location search bar by changing a shape of a specific duration in a full duration of the location search bar according to a drag. For one example, the graphic user interface program 114 includes an instruction for displaying a playback control item for setting the search speed of the multimedia application to 1/2x (where x is a number times the original data rate) in the touch screen 130, and includes an instruction for visually displaying the playback screen of the multimedia application which is moved by the displayed playback control item. For another example, the graphic user interface program 114 includes an instruction for displaying the location search bar on the touch screen 130 by changing a shape of a duration in which a drag is detected, so that a length of the duration in which the drag is detected is extended in the full duration of the location search bar, and may include an instruction for visually displaying the playback screen of the multimedia application according to a playback location which is moved due to the reshaped duration of the location search bar.

The touch detection program 115 senses a touch input on a touch sensing surface by interworking with the touch screen 130. That is, the touch detection program 115 determines whether a contact (touch) is made on the touch sensing surface, a movement of the contact, a movement direction of the contact, a movement time, and whether the contact is held. Herein, the determining on the movement of the contact includes determining of a movement speed (or magnitude), a movement velocity (or magnitude and direction), or an acceleration (including magnitude and/or direction).

In particular, the touch detection program 115 according to the embodiments of the present disclosure can sense a drag in a direction orthogonal to the location search bar displayed on the touch screen 130. For one example, the touch detection program 115 can sense a vertically-directed drag orthogonal to a horizontally-directly location search bar. For another example, the touch detection program 115 can sense a horizontally-directed drag orthogonal to a vertically-directed location search bar. Herein, the drag in the orthogonal direction does not imply only a drag orthogonal to the location search bar, but implies a drag of which an angle to the location search bar is within a pre-set range. Herein, the pre-set range can be configured and modified variously by a designer and a user. In addition, the touch detection program 115 can sense a touch on the location search bar, and can sense that the sensed touch is maintained for a specific time period.

In addition, the touch detection program 115 can sense a touch on the displayed playback control item and thereafter sense an additional touch on the location search bar in a state of maintaining the sensed touch, and can sense the touch on the displayed playback control item and thereafter sense an additional touch on a reshaped duration of the location search bar in a state of maintaining the detected touch.

The multimedia playback control program 116 can control a playback of the multimedia application such as a video application, a music application, etc. The multimedia playback control program 116 of the present disclosure can move the playback location currently being displayed according to the sensed touch in the location search bar. In addition, the multimedia playback control program 116 can move the playback location currently being displayed according to the sensed touch in the reshaped duration of the location search bar. In addition, upon sensing of an additional touch for moving a search pointer of the location search bar in a state of maintaining a touch on the playback control item, the multimedia playback control program 116 can move the playback location currently being displayed according to the playback control item. For example, upon sensing of a drag for moving a search pointer of the location search bar in a forward direction in a state of maintaining a touch on a 1/2x item for the search speed, the multimedia playback control program 116 can move the search pointer in the forward direction at 1/2x of a drag speed and determine a location indicated by the search pointer as the playback location.

Although not shown, the processor 120 includes at least one processor and a peripheral interface. In addition, the processor 120 executes a specific program (instruction set) stored in the memory 110 to perform a plurality of specific functions corresponding to the program.

The touch screen 130 is a touch-sensitive display and provides an interface for a touch input/output between the electronic device 100 and the user. The touch screen 130 is a medium for sensing a touch (or contact) by using a touch sensor (not shown), for delivering the sensed touch input to the electronic device 100, and for visually providing an output from the electronic device 100 to the user. That is, the touch screen 130 provides the user with a visual output on the basis of a text, a graphic, and a video in response to the touch input.

The touch screen 130 includes a touch sensing surface for sensing a user's touch input, and senses an input of the user touch by using a haptic contact, a tactile contact, or a combination thereof. For example, a touch sensing point of the touch screen 130 corresponds to a digit (such as a finger) used for the contact on the touch sensing surface. In addition, the touch screen 130 senses a contact made by an external device such as a stylus pen, etc., through the touch sensing surface. The touch screen 130 detects a contact on the touch screen 130 by interworking with the touch detection program 115. The detected contact is converted to an interaction corresponding to a user interface target (e.g., a soft key) displayed on the touch screen.

The touch screen 130 provides an interface for a touch input/output between the electronic device 100 and the user. More specifically, the touch screen 130 is a medium which delivers a user's touch input to the electronic device 100 and which visually provides the output from the electronic device 100 to the user. The touch screen 130 can use various display techniques such as a Liquid Crystal Display (LCD), a Light Emitting Diode (LED), a Light emitting Polymer Display (LPD), an Organic Light Emitting Diode (OLED), an Active Matrix Organic Emitting Diode (AMOLED), or a Flexible LED (FLED). The touch screen 130 of the present disclosure is not limited to the touch screen which uses such display techniques. In addition, the touch screen 130 can sense a start of a contact on the touch sensing surface, a movement of the contact, or a holding or ending of the contact by using various techniques of touch detection (or sensing) such as capacitive detection, resistive detection, infrared detection, or surface acoustic wave detection. The touch screen 130 of the present disclosure senses at least one touch from the user and senses a release of the touch. The touch sensed by the touch screen 130 can be a gesture such as a tap, a tap for a specific time period, a double tab, or a drag. More specifically, the touch screen 130 of the present disclosure can sense a touch on the location search bar and the playback control item from the user, and can sense an additional touch on the location search bar in a state of maintaining the touch on the playback control item.

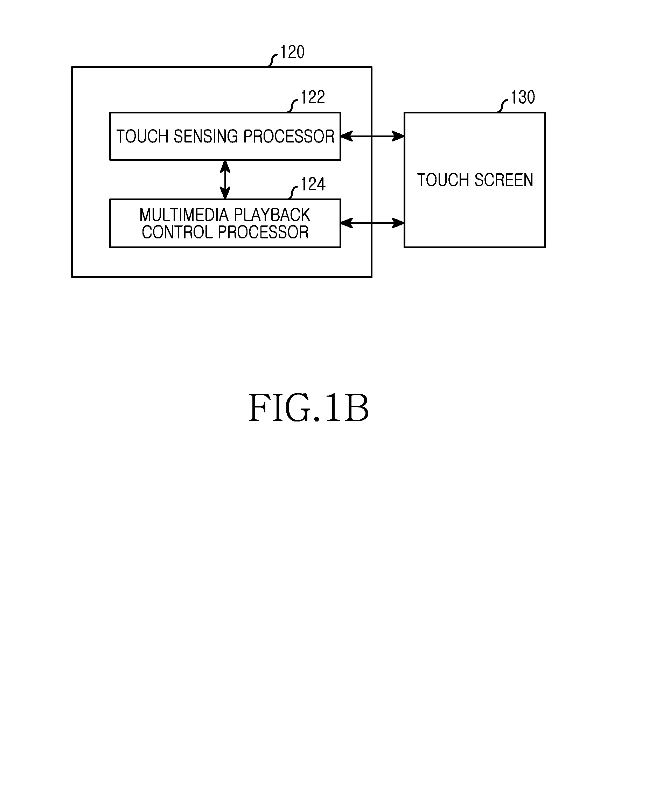

FIG. 1B illustrates a processor of an electronic device for accurately moving a playback location of a multimedia application according to embodiments of the present disclosure.

Referring to FIG. 1B, a processor 120 includes a touch sensing processor 122 and a multimedia playback control processor 124.

The touch sensing processor 122 senses a touch input on a touch sensing surface by interworking with a touch screen 130. That is, the touch sensing processor 122 determines whether a contact (touch) is made on the touch sensing surface, a movement of the contact (drag), a movement direction of the contact, a movement time, and whether the contact is held. Herein, the determining of the movement of the contact includes determining of a movement speed (or magnitude), a movement velocity (or magnitude and direction), or an acceleration (including magnitude and/or direction).

In particular, the touch sensing processor 122 according to the embodiments of the present disclosure can sense a drag in a direction orthogonal to the location search bar displayed on the touch screen 130. For one example, the touch sensing processor 122 can sense a vertically-directed drag orthogonal to a horizontally-directly location search bar. For another example, the touch sensing processor 122 can sense a horizontally-directed drag orthogonal to a vertically-directed location search bar. In addition, the touch sensing processor 122 can sense a touch on the location search bar, and can sense that the sensed touch is maintained for a specific time period.

In addition, the touch sensing processor 122 can sense a touch on the displayed playback control item and thereafter sense an additional touch on the location search bar in a state of maintaining the sensed touch, and can sense the touch on the displayed playback control item and thereafter sense an additional touch on a reshaped duration of the location search bar in a state of maintaining the detected touch.

The multimedia playback control processor 124 can control a playback of the multimedia application such as a video application, a music application, and the like. The multimedia playback control processor 124 controls a function for displaying the location search bar when playing back the multimedia application. If a drag in a direction orthogonal to the location search bar is sensed by the touch sensing processor 122, the multimedia playback control processor 124 controls a function for displaying the location search bar by changing a shape of a duration in which a drag is sensed, so that a length of the duration in which the drag is sensed is extended in the full duration of the location search bar. In addition, the multimedia playback control processor 124 can move a playback location currently being displayed to a location at which a touch is sensed, and can move the playback location currently being displayed according to the sensed touch for a reshaped duration of the location search bar. In addition, upon sensing of an additional touch for moving a search pointer of the location search bar in a state of maintaining a touch on the playback control item, the multimedia playback control processor 124 can move the playback location currently being displayed according to the touched playback control item and the additional touch. For example, upon sensing of a drag for moving a search pointer of the location search bar in a forward direction in a state of maintaining a touch on a 1/2x item for the search speed, the multimedia playback control processor 124 can move the playback location in the forward direction at 1/2x of a drag speed.

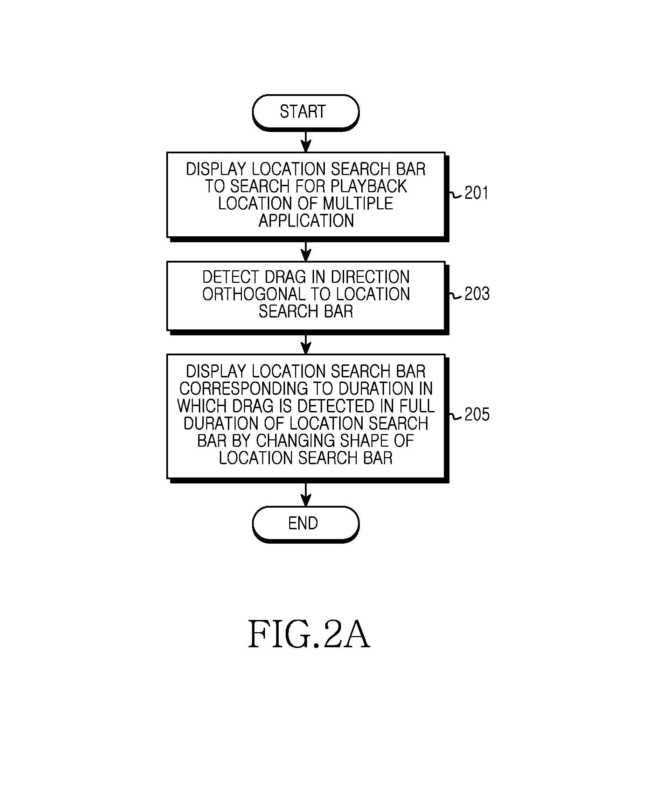

FIG. 2A illustrates a process of changing a location search bar of a multimedia application in the electronic device 100 according to embodiments of the present disclosure.

Referring to FIG. 2A, the electronic device displays a location search bar to search for a playback location of the multiple application in block 201. For example, the location search bar is a user interface for controlling a playback location of multimedia contents played back by using the multimedia application, and can be displayed automatically when the multimedia application is executed or can be displayed when a user touch is sensed.

In block 203, the electronic device 100 detects a drag in a direction orthogonal to the location search bar. For one example, if a vertically-directed location search bar is currently being displayed, the electronic device 100 detects a horizontally-directed drag orthogonal to the vertically-directed location search bar. For another example, if a horizontally-directed location search bar is currently being displayed, the electronic device 100 detects a vertically-directed drag orthogonal to the horizontally-directly location search bar.

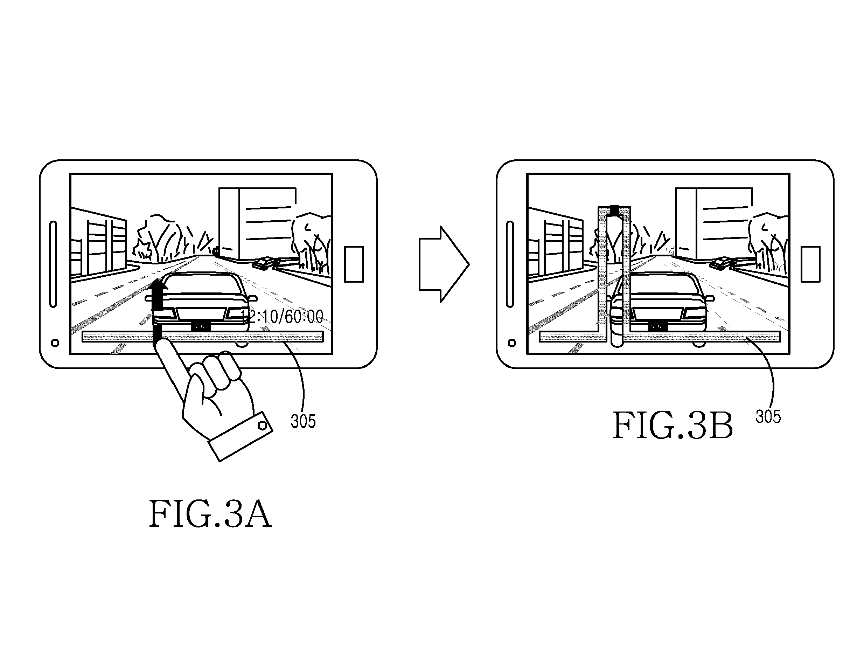

In block 205, the electronic device 100 displays the location search bar corresponding to a duration in which the drag is detected in a full duration of the location search bar by changing a shape of the location search bar. For example, as illustrated in FIG. 3A, the electronic device 100 can display the location search bar by changing a shape of a duration in which a drag is detected, so that a length of the duration in which the drag is detected is extended in a full duration of the location search bar. Herein, the electronic device 100 allocates a time period of the duration in which the drag is detected in the full duration of the location search bar to a reshaped duration. Therefore, by allocating the a small-length time period in which the drag is detected to a duration extended to be long due to a change in its shape, the user is allowed to easily search for a desired playback location in the changed long duration.

A changed shape of the duration in which the drag is sensed in the location search bar according to the present disclosure is not limited to the shape of FIG. 3B, and includes all shapes as long as the location search bar can be extended seamlessly.

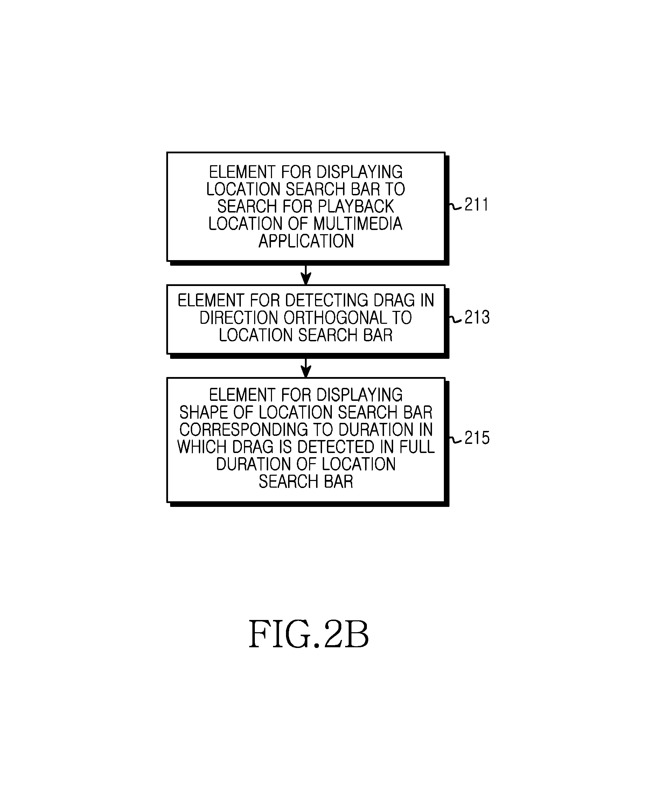

FIG. 2B illustrates an element for changing a location search bar of a multimedia application in the electronic device 100 according to embodiments of the present disclosure.

Referring to FIG. 2B, the electronic device 100 includes an element 211 for displaying a location search bar to search for a playback location of the multimedia application. In this case, the displayed location search bar includes a location search bar displayed in a vertical direction and a location search bar displayed in a horizontal direction. In addition, the electronic device 100 includes an element 213 for detecting a drag in a direction orthogonal to the location search bar and an element 215 for displaying a shape of the location search bar corresponding to a duration in which a drag is detected in a full duration of the location search bar.

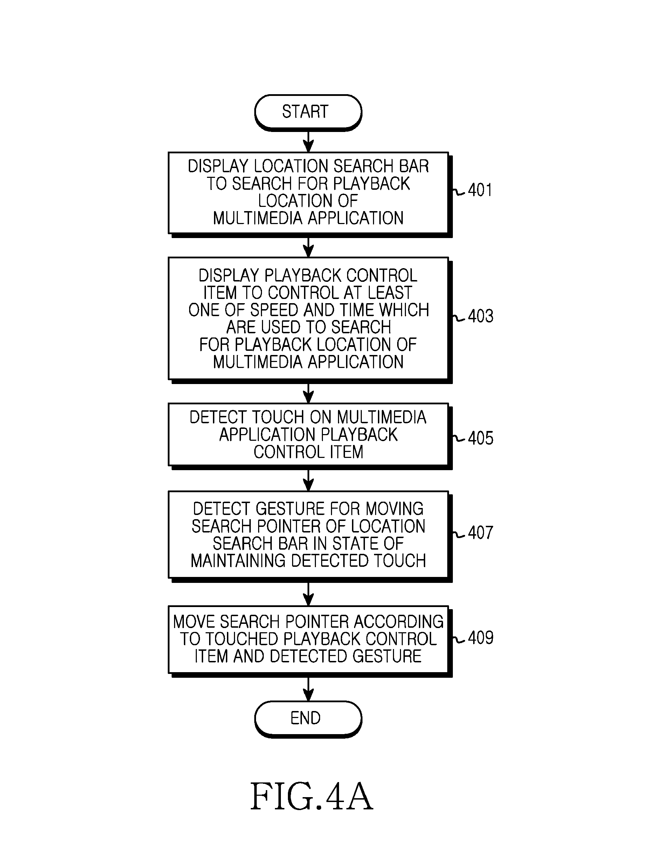

FIG. 4A illustrates a process of moving a playback location of a multimedia application by using multiple touches in the electronic device 100 according to embodiments of the present disclosure.

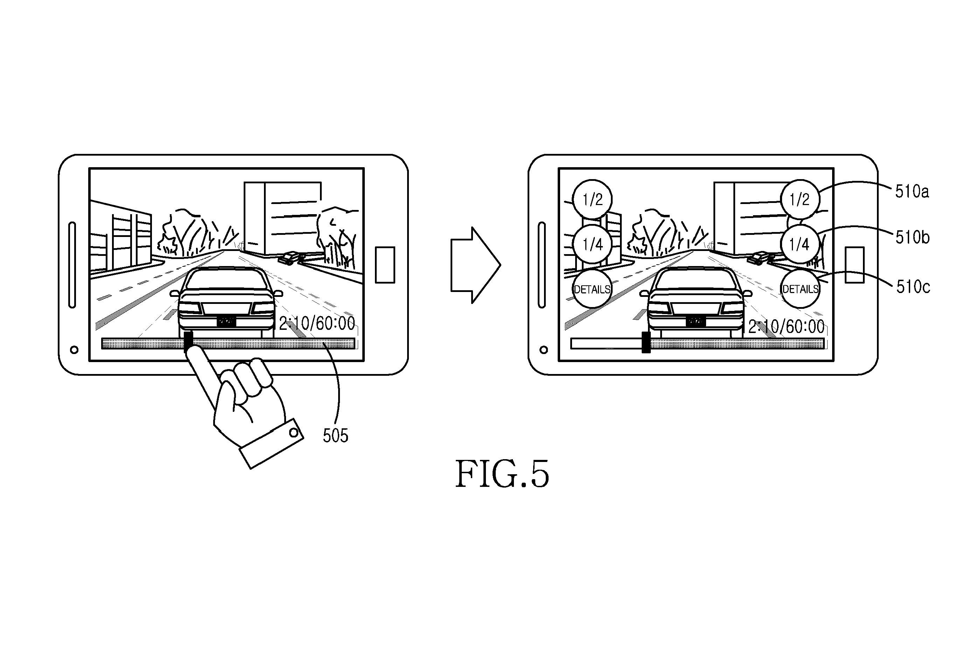

Referring to FIG. 4A, the electronic device 100 displays a location search bar to search for the playback location of the multimedia application in block 401. In block 403, the electronic device 100 displays a playback control item to control at least one of a speed and a time which are used to search for the playback location of the multimedia application. For example, as illustrated in FIG. 5, the electronic device 100 can display a search speed control item 510a, 510b, 510c such as 1/2x 510a, 1/4x 510b, details 510c (user defined), etc. In this case, the playback control item can be automatically displayed when the multimedia application is executed, or can be displayed when a user touch is sensed. In addition, the playback control item can be displayed in a duration other than a duration in which the location search bar 505 is displayed, and for user convenience, can be symmetrically displayed to the left and right of the screen or can be displayed any one of the left and right of the screen.

Thereafter, the electronic device 100 detects a touch on a multimedia application playback control item in block 405, and detects a gesture for moving a search pointer of the location search bar in a state of maintaining the detected touch in block 407. In this case, the gesture for moving the search pointer of the location search bar includes a drag and a tap for a specific time period.

In block 409, the electronic device 100 moves the search pointer according to the touched playback control item and the detected gesture. For example, upon sensing of an additional gesture for moving the location search bar in a forward direction in a state where an item for adjusting a search speed to 1/2x is touched among the playback control items, the electronic device 100 can move the search pointer in the forward direction at 1/2x of a drag speed.

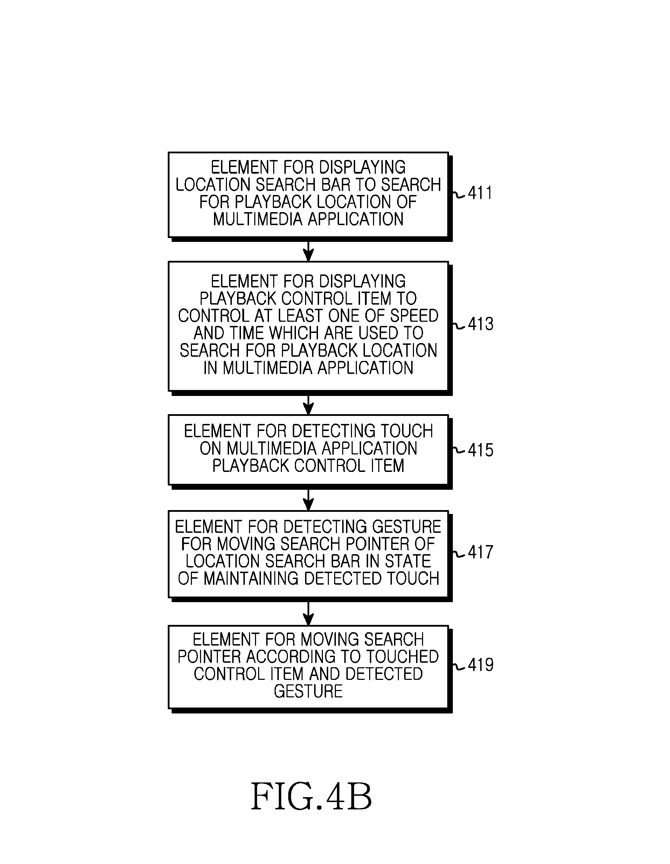

FIG. 4B illustrates an element for moving a playback location of a multimedia application by using multiple touches in the electronic device 100 according to embodiments of the present disclosure.

Referring to FIG. 4B, the electronic device 100 includes a process block 411 for displaying a location search bar to search for the playback location of the multimedia application. In addition, the electronic device 100 includes a process block 413 for displaying a playback control item to control at least one of a speed and a time which are used to search for the playback location in the multimedia application. For example, the electronic device 100 can display a location search bar, and can display an item for controlling a search speed of multimedia such as 1/2x, 1/4x, 1/8x, etc. In addition, the electronic device 100 includes a process block 415 for detecting a touch on a multimedia application playback control item and a process block 417 for detecting a gesture for moving a search pointer of the location search bar in a state of maintaining the detected touch. In addition, the electronic device 100 includes an element 419 for moving the search pointer according to the touched control item and the detected gesture.

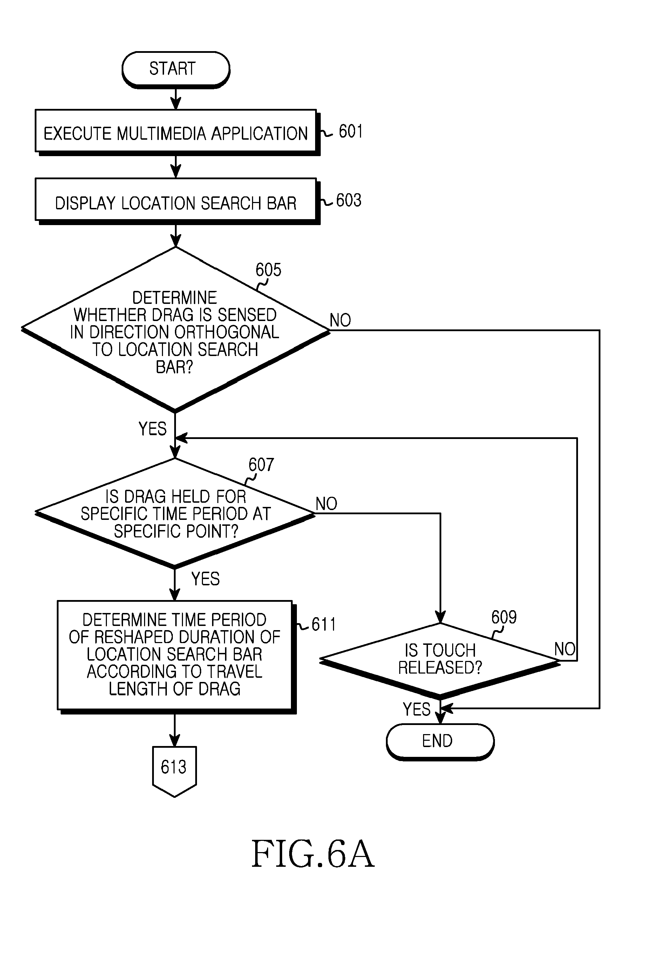

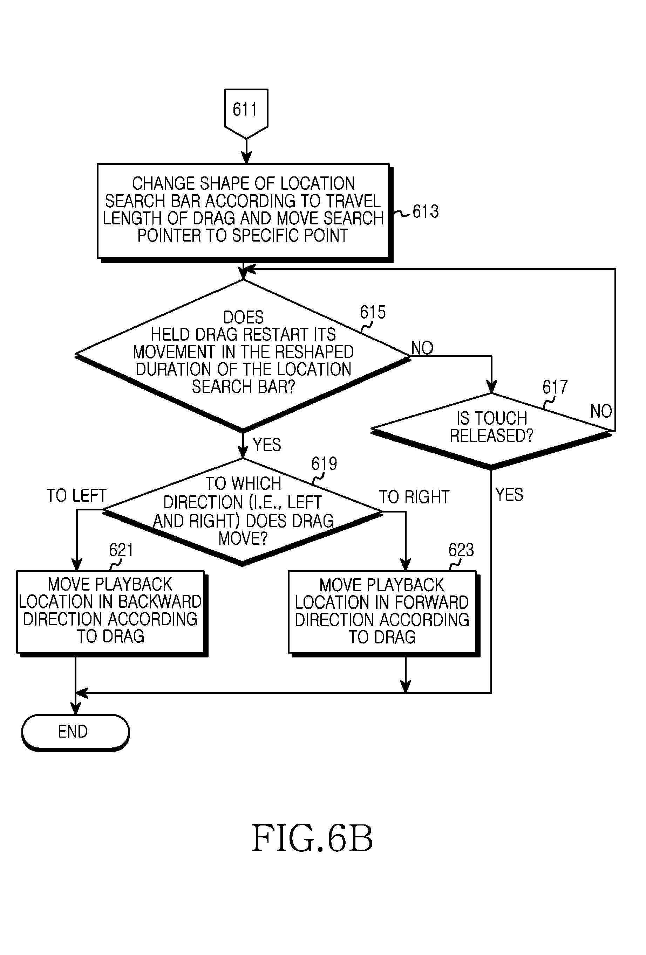

FIG. 6A illustrates a process of moving a playback location by changing a shape of a specific duration of a location search bar in an electronic device according to embodiments of the present disclosure.

Referring to FIG. 6A, the electronic device 100 executes a multimedia application in block 601. In this case, the multimedia application includes a video application and a music application. Thereafter, the electronic device 100 displays a location search bar in block 603, and determines whether a drag is sensed in a direction orthogonal to the location search bar in block 605. For example, the electronic device 100 can confirm whether a vertically-directed drag is sensed in case of a horizontally-directed location search bar, and can confirm whether a horizontally-directed drag is sensed in case of a vertically-direction location search bar.

If the drag is not sensed in the direction orthogonal to the location search bar, the procedure of FIG. 6A ends.

Otherwise, if the drag is sensed in the direction orthogonal to the location search bar, proceeding to block 607, the electronic device 100 determines whether the drag is held for a specific time period at a specific point. Herein, the holding of the drag implies that a touch stays at a specific location more than a specific time while a touch is dragged.

If the drag is not held for the specific time period at the specific point, proceeding to block 609, the electronic device 100 confirms whether the touch is released. Herein, the release of the touch implies that a contact of the drag held for a specific time is released. If the touch is released, the procedure of FIG. 6A ends. Otherwise, if the touch is not released, returning to block 607, the previous process blocks are repeated.

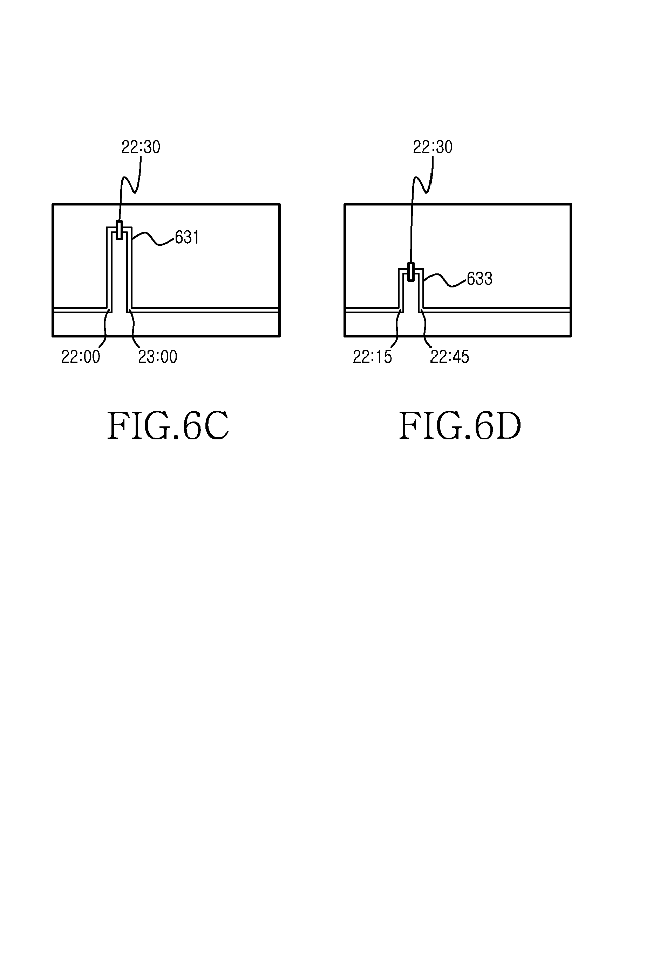

Otherwise, if the drag is held for the specific time period at the specific point, proceeding to block 611, the electronic device 100 determines a time period of a reshaped duration of the location search bar according to a travel length of the drag. In block 613, the electronic device 100 can change the shape of the location search bar according to the travel length of the drag and can move a search pointer to the specific point. For example, as illustrated in FIG. 6C, if a drag is sensed in a direction orthogonal to a duration of 22'30" of the location search bar and thereafter the sensed drag is held at a specific point 631 for a specific time period, the electronic device 100 determines a time period of the location search bar to be reshaped to a time period between 22'00" to 23'00" according to a duration in which the drag is sensed in the location search bar and a travel length of the sensed drag. Thereafter, the electronic device 100 changes the shape of the duration between 22'00" and 23'00" in which the drag is sensed in the full duration of the location search bar to have a duration as longer as the travel length of the drag, and moves the search pointer to the specific point 631 in which the drag is held for a specific time period.

For another example, as illustrated in FIG. 6D, if a drag is sensed in a direction orthogonal to a duration of 22'30" of the location search bar and thereafter the sensed drag is held for a specific time period at a specific point 633, the electronic device 100 determines a time period of the location search bar to be changed according to a travel length of the sensed drag to a duration between 22'15" and 22'45". Thereafter, the electronic device 100 changes a shape of the duration between 22'15" and 22'45" in which the drag is sensed in the full duration of the location search bar, and moves a search pointer to the specific point 633 in which the drag is held for a specific time period.

As such, the time period of the location search bar to be reshaped can be determined in a variable manner according to the travel length of the drag.

In block 615, the electronic device 100 determines whether the drag held in block 607 restarts its movement in the reshaped duration of the location search bar.

If the held drag restarts its movement in the reshaped duration of the location search bar, proceeding to block 617, the electronic device 100 senses whether the touch is released. If the touch is released, the procedure of FIG. 6A ends. Otherwise, if the touch is not released, returning to block 615, the previous blocks are repeated.

Otherwise, if the held drag restarts its movement in the reshaped duration of the location search bar, proceeding to block 619, the electronic device 100 confirms whether the drag is moved to the left or the right with respect to a location pointer of the location search bar.

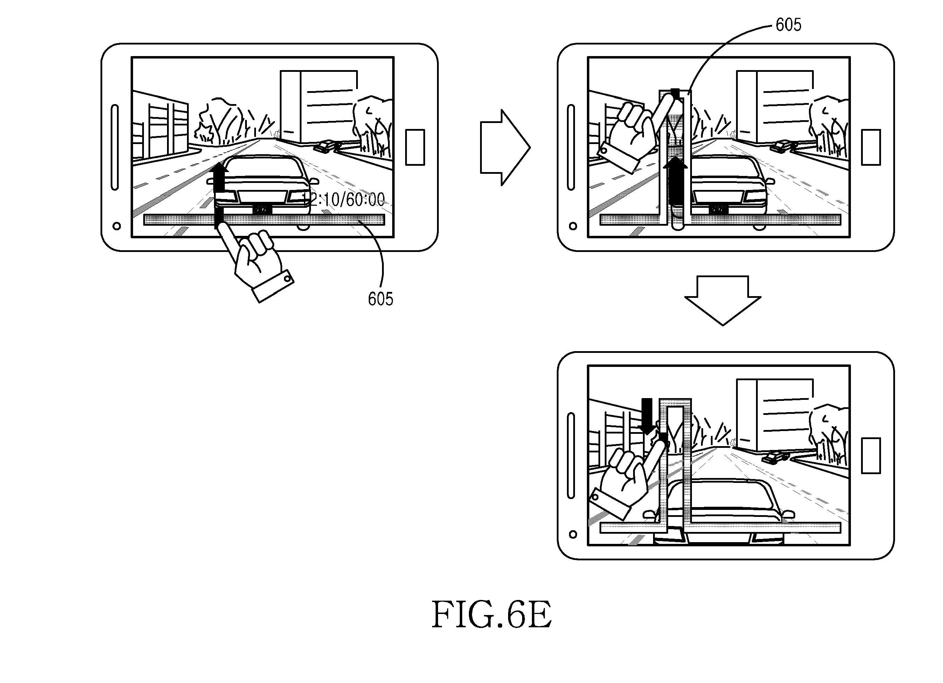

If the drag is moved to the left, proceeding to block 621, the electronic device 100 moves the playback location in a backward direction according to the drag. For example, as illustrated in FIG. 6E, if a drag is sensed in a direction orthogonal to the location search bar and thereafter the sensed drag is held at a specific point for a specific time period and thus the location search bar is changed, then the electronic device 100 can move the playback location in the backward direction upon sensing of a drag which is moved to the left with respect to the location pointer of the location search bar in a reshaped duration of the location search bar.

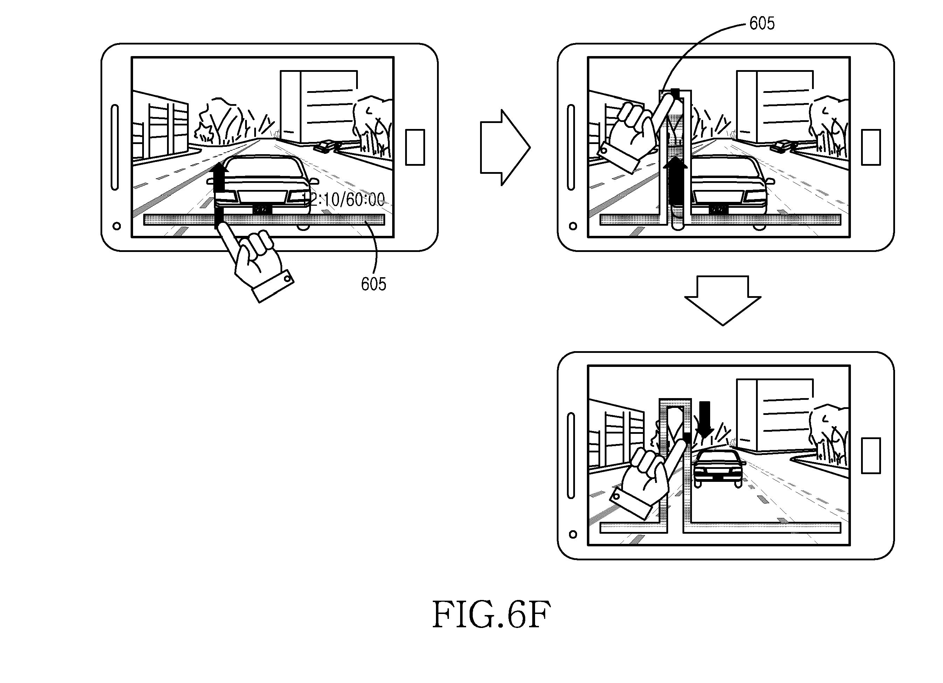

If the drag is moved to the right, proceeding to block 623, the electronic device 100 moves the playback location in a forward direction according to the drag, and the procedure of FIG. 6A ends. For example, as illustrated in FIG. 6F, if a drag is sensed in a direction orthogonal to the location search bar 605 and thereafter the sensed drag is held at a specific point for a specific time period and thus the location search bar 605 is changed, then the electronic device 100 can move the playback location in the forward direction upon sensing of a drag which is moved to the right with respect to the location pointer of the location search bar in a reshaped duration of the location search bar.

In this case, since a length of the reshaped duration of the location search bar is in proportion to a time allocated to the reshaped duration, a search speed is constant in the reshaped duration irrespective of a drag length and a length of the reshaped duration.

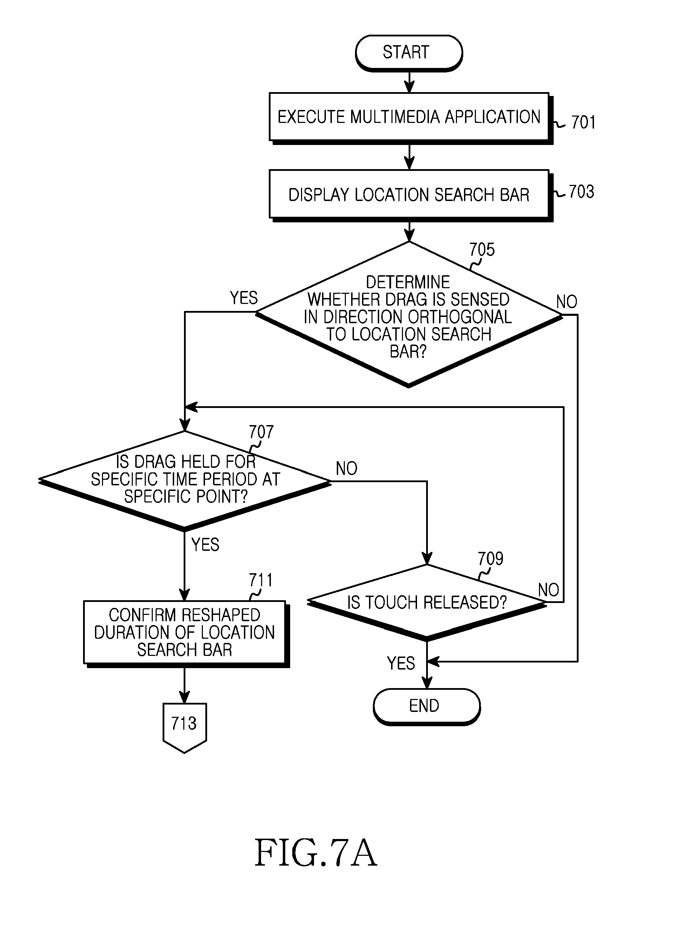

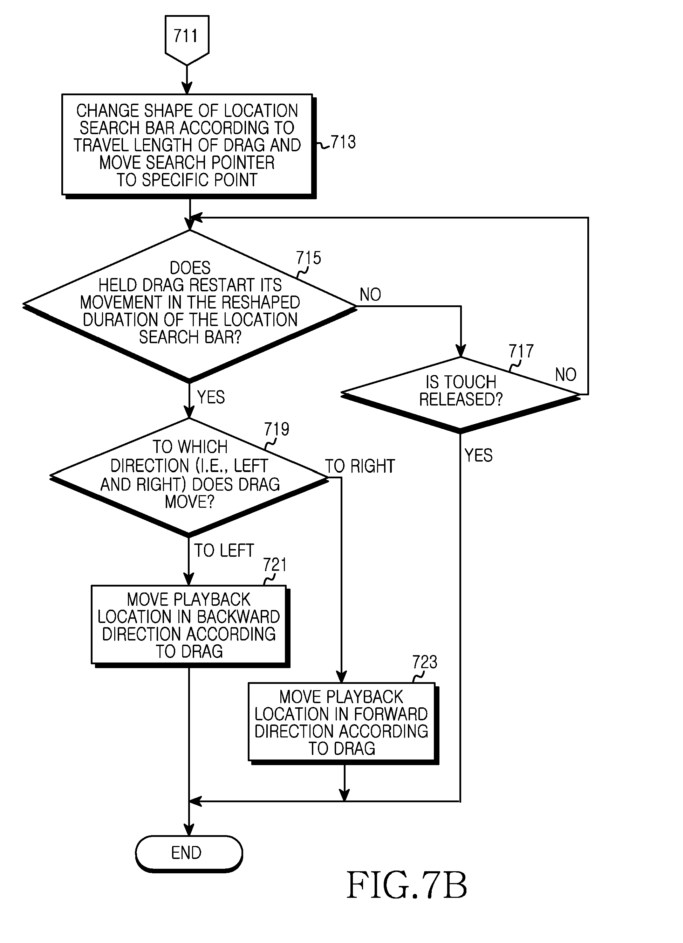

FIG. 7A illustrates a process of moving a playback location by changing a shape of a specific duration of a location search bar in an electronic device according to embodiments of the present disclosure.

Referring to FIG. 7A, the electronic device 100 executes a multimedia application in block 701. In this case, the multimedia application includes a video application and a music application. Thereafter, the electronic device 100 displays a location search bar in block 703, and determines whether a drag is sensed in a direction orthogonal to the location search bar in block 705. For example, the electronic device 100 can confirm whether a vertically-directed drag is sensed in case of a horizontally-directed location search bar, and can confirm whether a horizontally-directed drag is sensed in case of a vertically-direction location search bar.

If the drag not sensed in the direction orthogonal to the location search bar is, the procedure of FIG. 7A ends.

Otherwise, if the drag is sensed in the direction orthogonal to the location search bar, proceeding to block 707, the electronic device 100 determines whether the drag is held for a specific time period at a specific point.

If the drag is not held for the specific time period at the specific point, proceeding to block 709, the electronic device 100 confirms whether the touch is released. If the touch is released, the procedure of FIG. 7A ends. Otherwise, if the touch is not released, returning to block 707, the previous blocks are repeated.

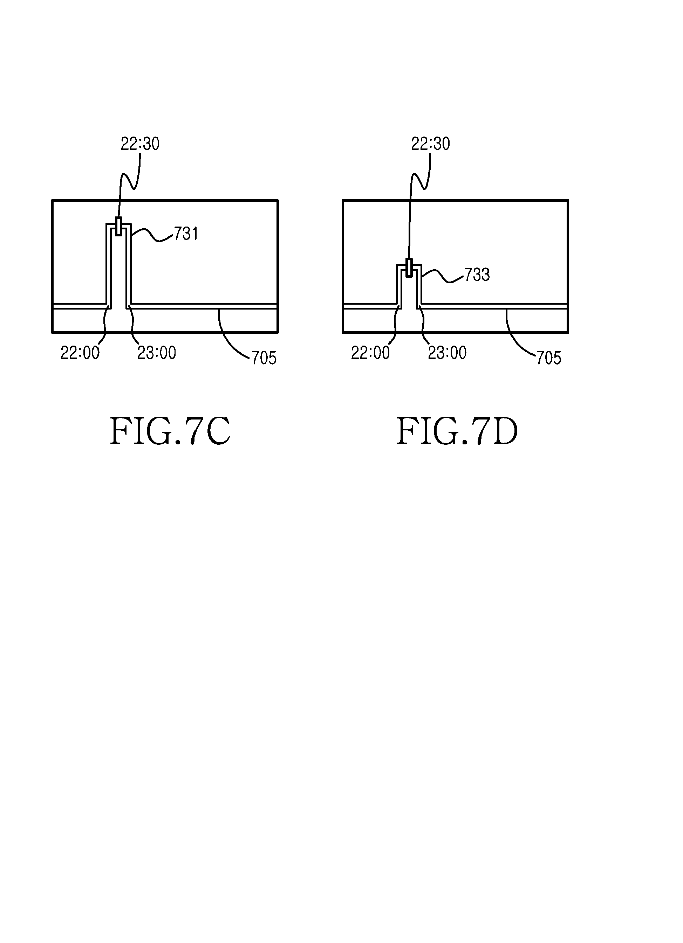

Otherwise, if the drag is held for the specific time period at the specific point, proceeding to block 711, the electronic device 100 confirms a reshaped duration of the location search bar in a full duration of the location search bar. In block 713, the electronic device 100 can change the shape of the location search bar according to the travel length of the drag and can move a search pointer to the specific point. In this case, a time period allocated to the location search bar changed depending on the travel length of the drag is identical irrespective of the changed length. For example, as illustrated in FIG. 7C, if a drag is sensed in a direction orthogonal to a duration of 22'30" of the location search bar 705 and thereafter the sensed drag is held for a specific time period at a specific point 731, the electronic device 100 confirms that a time period in which the location search bar is changed is one minute. Thereafter, the electronic device 100 changes the shape of the search location car such that a duration corresponding to one minute located 30 seconds before and after a duration of 20'30" in the location search bar in which the drag is sensed in an orthogonal direction has a long duration according to a travel length of the drag, and moves a search pointer to the specific point 731 in which the drag is held for a specific time period. For another example, as illustrated in FIG. 7D, if a drag is sensed in a direction orthogonal to the duration of 22'30" of the location search bar and thereafter the sensed drag is held at the specific point 731 for a specific time period, the electronic device 100 confirms that a time period in which the location search bar 705 is changed is one minute. Thereafter, the electronic device 100 changes the shape of the search location bar such that a duration between 22'00" and 23'00" located 30 seconds before/after a duration of 20:30 in the location search bar in which the drag is sensed in an orthogonal direction has a long duration according to a travel length of the drag, and moves a search pointer to the specific point 731 in which the drag is held for a specific time period. In this case, the time period in which the shape of the location search bar is changed according to a location at which the drag is sensed can be pre-set in a design process or can be changed by a user.

In block 715, the electronic device 100 determines whether the held drag restarts its movement in the reshaped duration of the location search bar.

If the held drag restarts its movement in the reshaped duration of the location search bar, proceeding to block 717, the electronic device 100 senses whether the touch is released. If the touch is released, the procedure of FIG. 7A ends. Otherwise, if the touch is not released, returning to block 715, the previous process blocks are repeated.

Otherwise, if the held drag restarts its movement in the reshaped duration of the location search bar, proceeding to block 719, the electronic device 100 confirms whether the drag is moved to the left or the right with respect to a location pointer of the location search bar.

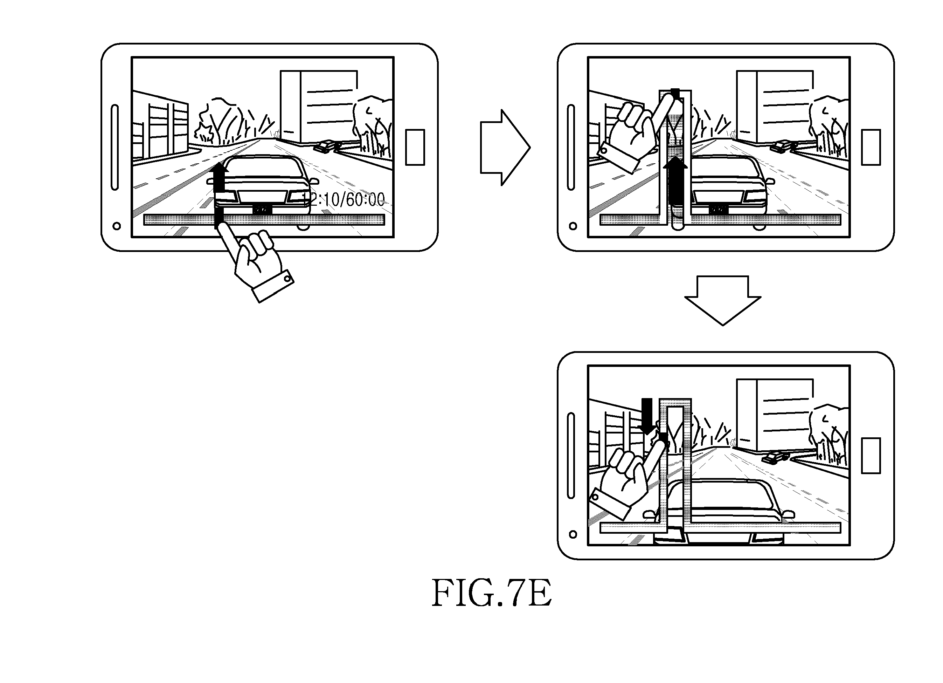

If the drag is moved to the left, proceeding to block 721, the electronic device 100 moves the playback location in a backward direction according to the drag. For example, as illustrated in FIG. 7E, if a drag is sensed in a direction orthogonal to the location search bar and thereafter the sensed drag is held at a specific point for a specific time period and thus the location search bar is changed, then the electronic device 100 can move the playback location in the backward direction upon sensing of a drag which is moved to the left with respect to the location pointer of the location search bar in a reshaped duration of the location search bar.

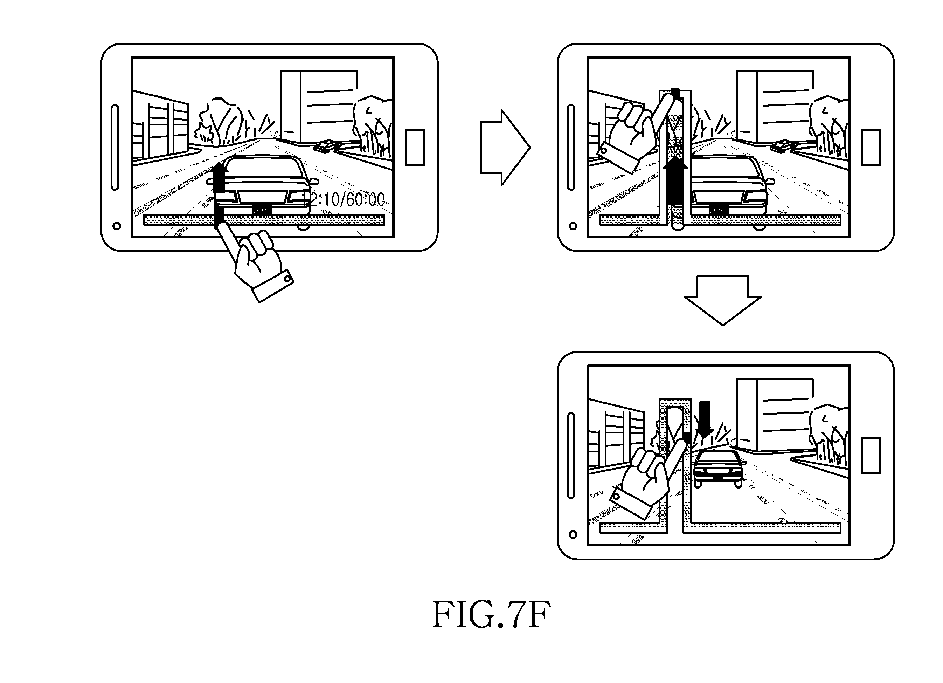

If the drag is moved to the right, proceeding to block 723, the electronic device 100 moves the playback location in a forward direction according to the drag, and the procedure of FIG. 7A ends. For example, as illustrated in FIG. 7F, if a drag is sensed in a direction orthogonal to the location search bar and thereafter the sensed drag is held at a specific point for a specific time period and thus the location search bar is changed, then the electronic device 100 can move the playback location in the forward direction upon sensing of a drag which is moved to the right with respect to the location pointer of the location search bar in a reshaped duration of the location search bar.

In this case, since a time allocated to the reshaped duration is constant irrespective of a length of the reshaped duration of the location search bar, a search speed in the reshaped duration of the location search bar varies depending on a length of the changed duration.

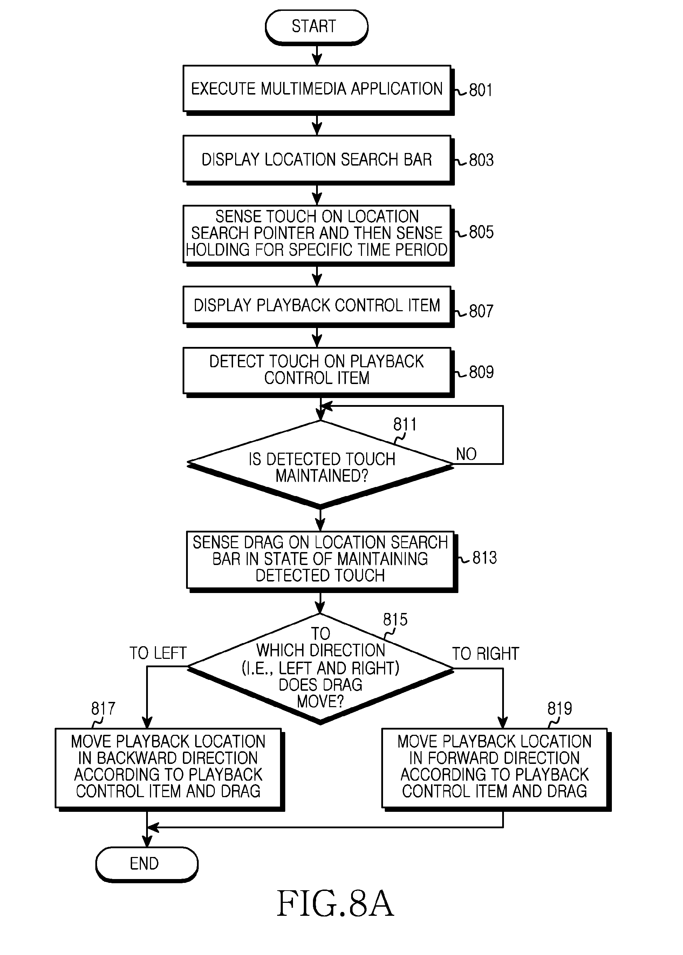

FIG. 8A illustrates a process of moving a playback location of a multimedia application by using a playback control item of the electronic device 100 according to embodiments of the present disclosure.

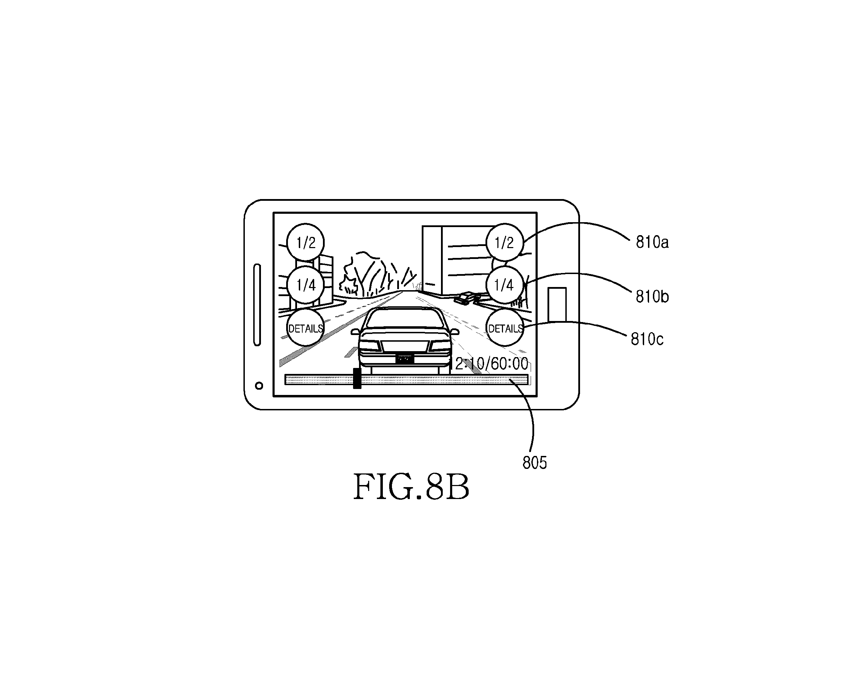

Referring to FIG. 8A, the electronic device 100 executes a multimedia application in block 801. In this case, the multimedia application includes a video application and a music application. Thereafter, the electronic device 100 displays a location search bar in block 803, senses a touch on a location search pointer and then senses a holding for a specific time period in block 805, and displays a playback control item in block 807. In other words, the electronic device 100 can display the playback control item if the touch is maintained for a specific time period with respect to the location search pointer. Herein, the playback control item implies an item for controlling the search speed and the search time of the multimedia application. In addition, since the electronic device 100 moves the location search pointer to a corresponding location upon sensing of a touch on the location search bar, the electronic device 100 can display a playback control item even if the holding is sensed during the specific time period after sensing the touch on the location search bar. In this case, the playback control item can be displayed in a duration other than a duration in which the location search bar is displayed, and for user convenience, can be symmetrically displayed to the left and right of the screen. For example, as illustrated in FIG. 8B, the electronic device 100 can display a search speed control item 810 a, 810b, 810c such as 1/2x 810a, 1/4x 810b, details 810c (user defined), etc., in addition to the location search bar 805.

Thereafter, the electronic device 100 detects a touch on the playback control item in block 809, and confirms whether the detected touch is maintained in block 811.

If the detected touch is not maintained, block 811 is repeated.

Otherwise, if the detected touch is maintained, the electronic device 100 senses a drag on the location search bar in a state of maintaining the detected touch in block 813, and thereafter confirms to which direction, that is, left or right, the drag is moved in block 815. It is assumed herein that the location search bar displayed in the electronic device 100 is a horizontally-directed location search bar. If the location search bar is a vertically-directed location search bar, to which direction, that is , up or down, the drag is moved is confirmed.

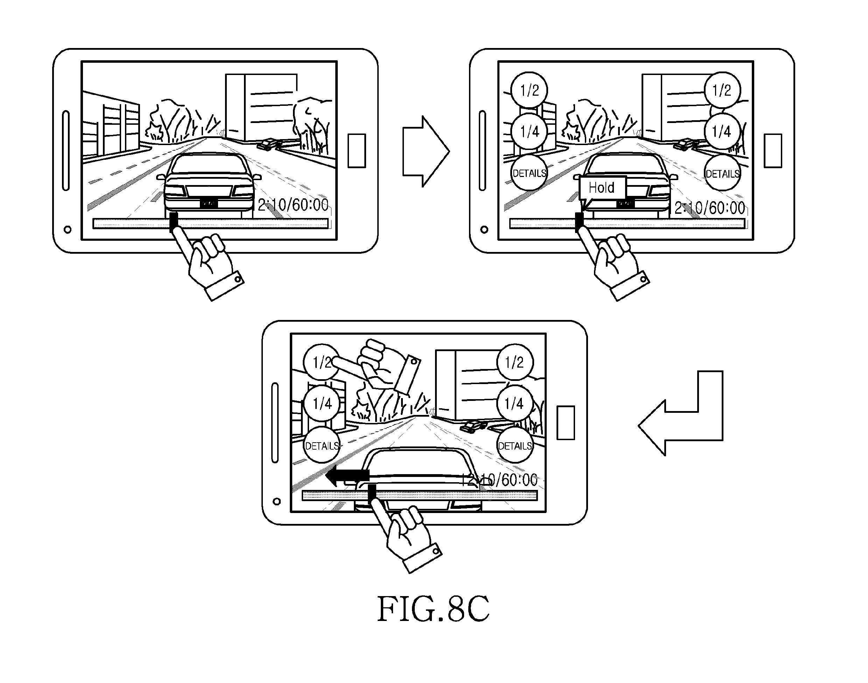

If the drag is moved to the left, the electronic device 100 moves the playback location in a backward direction according to the playback control item and the drag in block 817. For example, as illustrated in FIG. 8C, upon sensing of an additional drag which is moved to the left on the location search bar in a state where a 1/2x speed control item 810a is touched, the electronic device 100 can move the playback location in the backward direction at 1/2x of a drag speed.

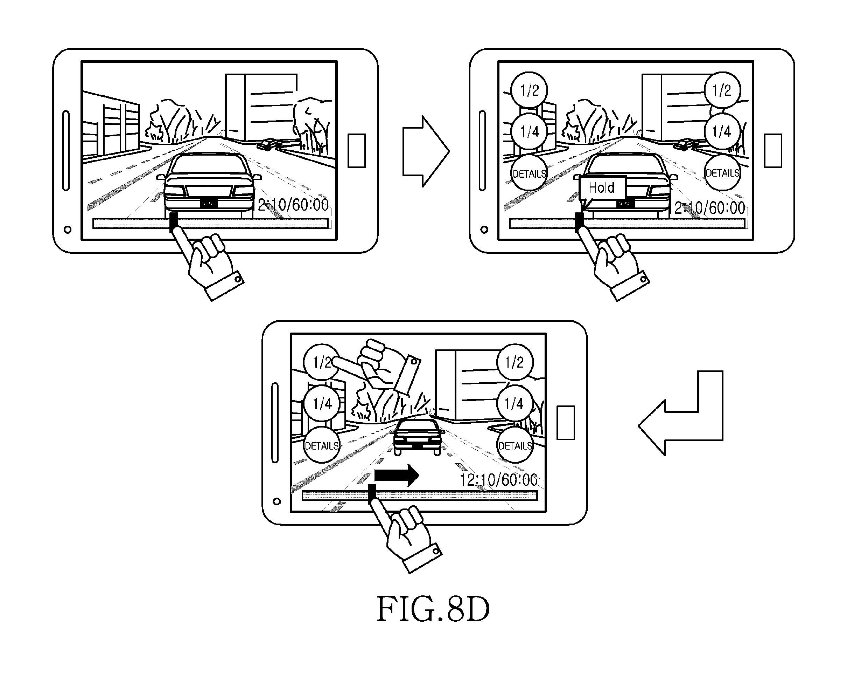

Otherwise, if the drag is moved to the left, the electronic device 100 moves the playback location in a forward direction according to the playback control item and the drag in block 819. For example, as illustrated in FIG. 8D, upon sensing of an additional drag which is moved to the right on the location search bar in a state where the 1/2x speed control item 810a is touched, the electronic device 100 can move the playback location in the forward direction at 1/2x of a drag speed.

In this case, since a speed of a drag and a travel speed of the location search pointer are different according to the selected playback control item, a distance difference may exist between a location to which the drag is moved and a location to which the location search point is moved.

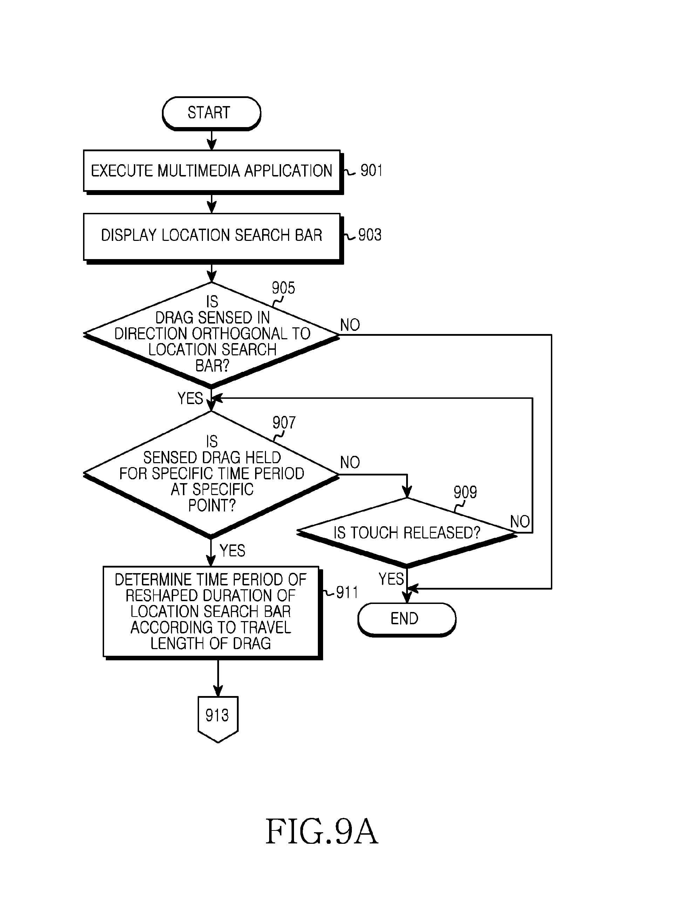

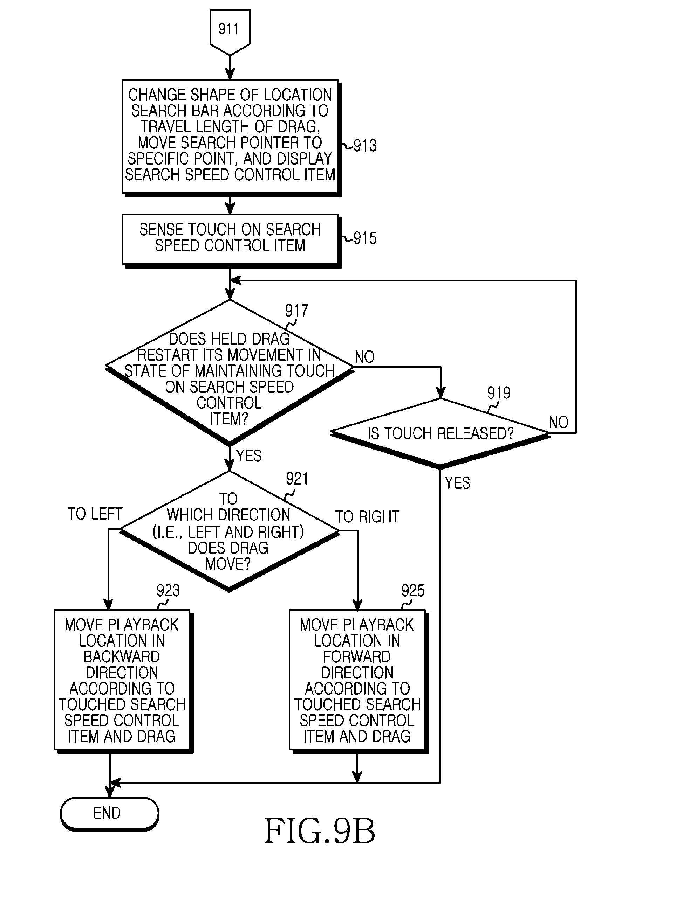

FIG. 9A and FIG. 9B illustrate a process of moving a playback location by changing a shape of a location search bar and by using a search speed control item in an electronic device according to embodiments of the present disclosure.

Referring to FIG. 9A and FIG. 9B, the electronic device 100 executes a multimedia application in block 901. In this case, the multimedia application includes a video application and a music application. Thereafter, the electronic device 100 displays a location search bar in block 903 and determines whether a drag is sensed in a direction orthogonal to the location search bar in block 905. For example, the electronic device 100 can confirm whether a vertically-directed drag is sensed in case of a horizontally-directed location search bar, and can confirm whether a horizontally-directed drag is sensed in case of a vertically-direction location search bar.

If the drag is not sensed in the direction orthogonal to the location search bar, the procedure of FIG. 9A ends.

Otherwise, if the drag is sensed in the direction orthogonal to the location search bar, proceeding to block 907, the electronic device 100 determines whether the sensed drag is held for a specific time period at a specific point.

If the sensed drag is not held for the specific time period at the specific point, proceeding to block 909, the electronic device 100 confirms whether the touch is released. If the touch is released, the procedure of FIG. 9A ends. Otherwise, if the touch is not released, returning to block 907, the previous process blocks are repeated.

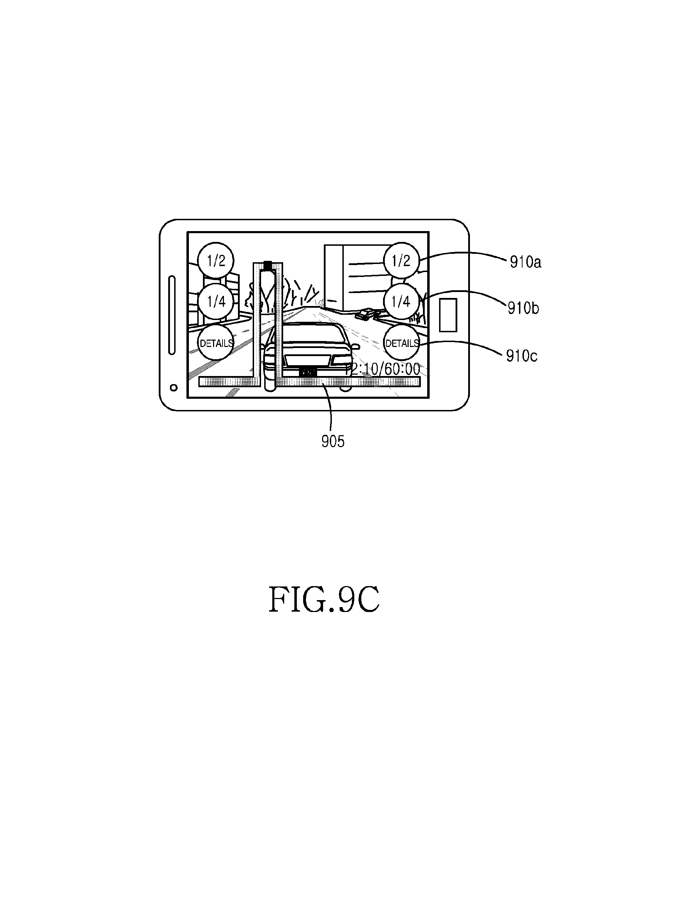

Otherwise, if the sensed drag is held for the specific time period at the specific point, proceeding to block 911, the electronic device 100 determines a time period of a reshaped duration of the location search bar according to a travel length of the drag. In block 913, the electronic device 100 can change the shape of the location search bar according to the travel length of the drag, move a search pointer to the specific point, and additionally display the search speed control item. For example, as illustrated in FIG. 9C, the electronic device 100 can change a shape of a duration in which a drag is sensed in the location search bar according to a travel length of the drag, and can display the search speed control item 910a, 910b, 910c such as 1/2x 910a, 1/4x 910b, details 910c (user defined), etc., in addition to the location search bar 905.

In block 915, the electronic device 100 senses a touch on the search speed control item. In this case, the search speed control item is an item for setting the search speed based on the drag to a pre-set data rate or to a data rate input by a user.

In block 917, the electronic device 100 confirms whether the held drag restarts its movement in a state of maintaining a touch on the search speed control item.

If the held drag does not restart its movement in the state of maintaining the touch on the search speed control item, proceeding to block 919, the electronic device 100 senses whether the touch is released. If the touch is released, the procedure of FIG. 9B ends. Otherwise, if the touch is not released, returning to block 917, the previous are repeated.

Otherwise, if the held drag restarts its movement in the state of maintaining the touch on the search speed control item, proceeding to block 921, the electronic device 100 confirms whether the drag is moved to the left or the right with respect to a location pointer of the location search bar.

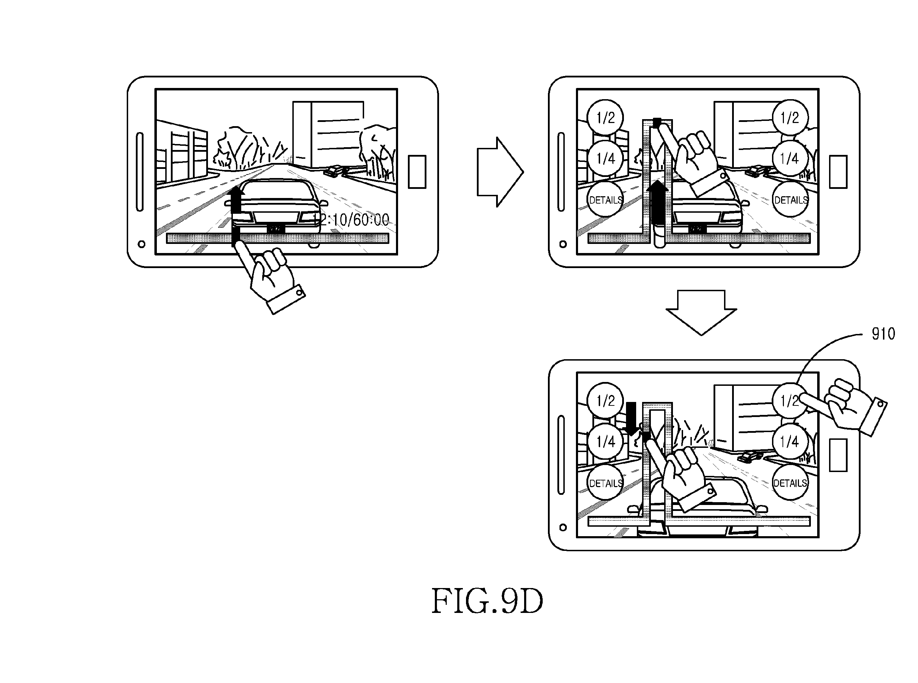

If the drag is moved to the left, proceeding to block 923, the electronic device 100 moves the playback location in a backward direction according to the touched search speed control item and the drag, and then the procedure of FIG. 9B ends. For example, as illustrated in FIG. 9D, if a drag is sensed in a direction orthogonal to the location search bar and thereafter the sensed drag is held at a specific point for a specific time period, the electronic device 100 changes the location search bar and displays the search speed control item. Thereafter, upon sensing of an additional drag which is moved to the left with respect to the changed duration of the location search bar in a state where a 1/2x speed control item 910a is touched, the electronic device 100 can move the playback location in the backward direction at 1/2x of a drag speed.

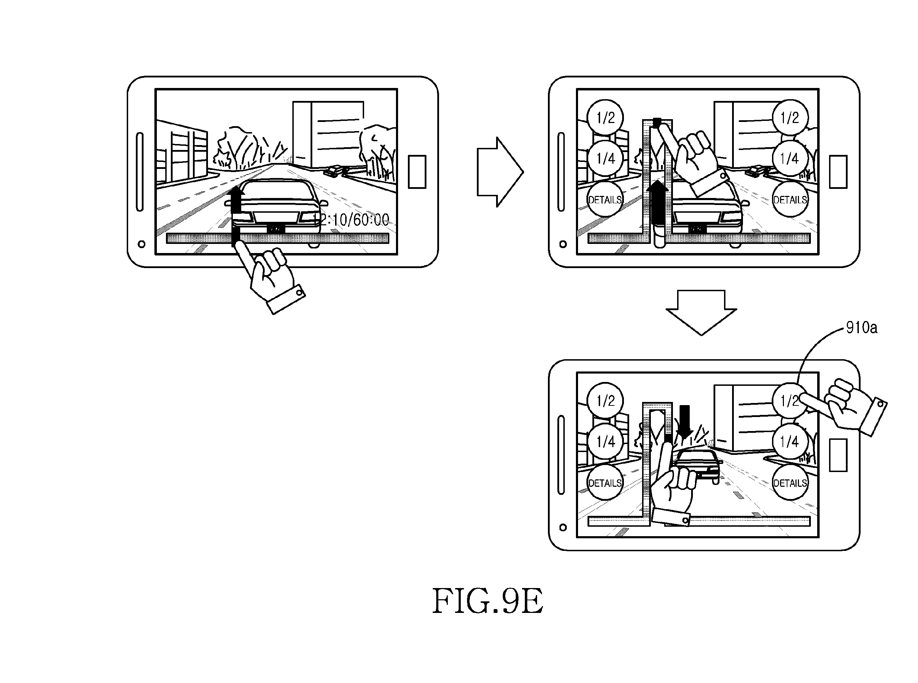

If the drag is moved to the right, proceeding to block 925, the electronic device 100 moves the playback location in a forward direction according to the touched search speed control item and the drag, the procedure of FIG. 9B ends. For example, as illustrated in FIG. 9E, if a drag is sensed in a direction orthogonal to the location search bar and thereafter the sensed drag is held at a specific point for a specific time period, the electronic device 100 changes the location search bar and displays the search speed control item. Thereafter, upon sensing of an additional drag which is moved to the right with respect to the changed duration of the location search bar in a state where a 1/2x speed control item 910a is touched, the electronic device 100 can move the playback location in the forward direction at 1/2x of a drag speed.

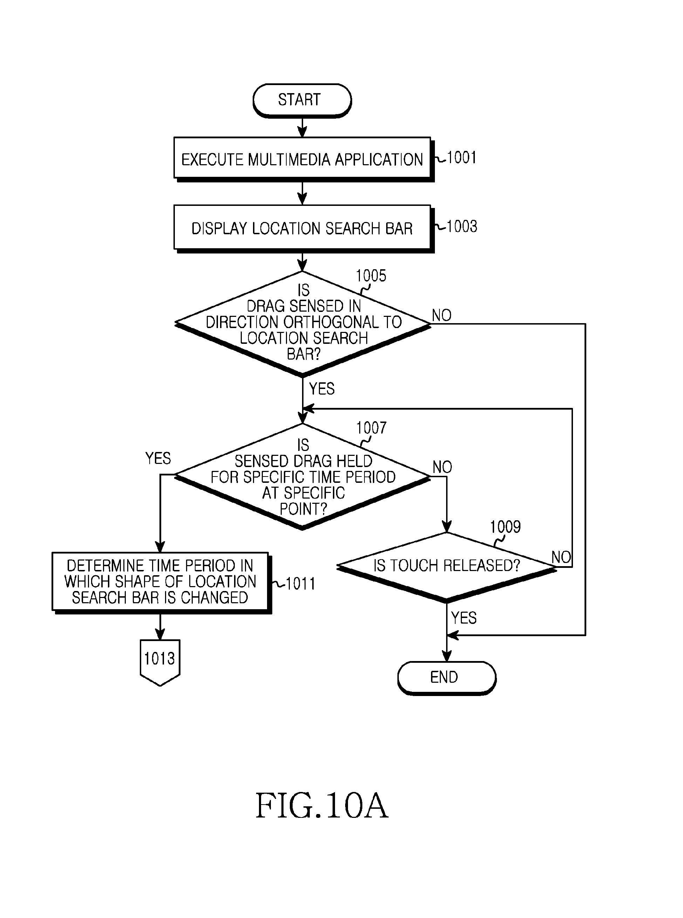

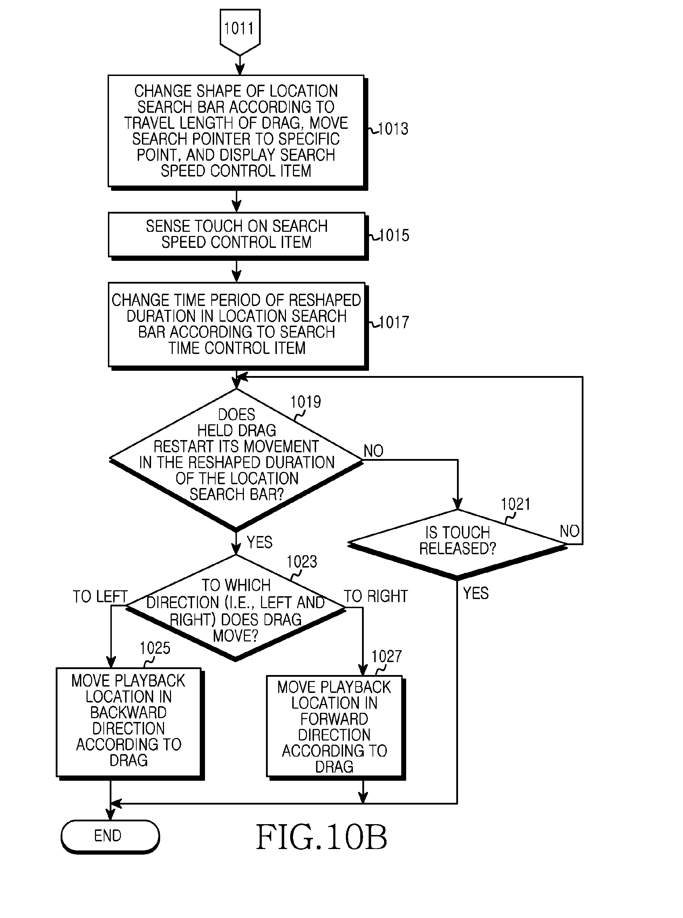

FIG. 10A and FIG. 10B illustrate a process of moving a playback location by changing a shape of a location search bar and by using a search speed control item in an electronic device according to embodiments of the present disclosure.

FIG. 10A and FIG. 10B, the electronic device 100 executes a multimedia application in block 1001. In this case, the multimedia application includes a video application and a music application. Thereafter, the electronic device 100 displays a location search bar in block 1003, and determines whether a drag is disclosure a direction orthogonal to the location search bar in block 1005. For example, the electronic device 100 can confirm whether a vertically-directed drag is sensed in case of a horizontally-directed location search bar, and can confirm whether a horizontally-directed drag is sensed in case of a vertically-direction location search bar.

If the drag is not sensed in the direction orthogonal to the location search bar, the procedure of FIG. 10A ends.

Otherwise, if the drag is sensed in the direction orthogonal to the location search bar, proceeding to block 1007, the electronic device 100 determines whether the drag is held (maintained) for a specific time period at a specific point.

If the sensed drag is not held for the specific time period at the specific point, proceeding to block 1009, the electronic device 100 confirms whether the touch is released. If the touch is released, the procedure of FIG. 10A ends. Otherwise, if the touch is not released, returning to block 1007, the previous process blocks are repeated.

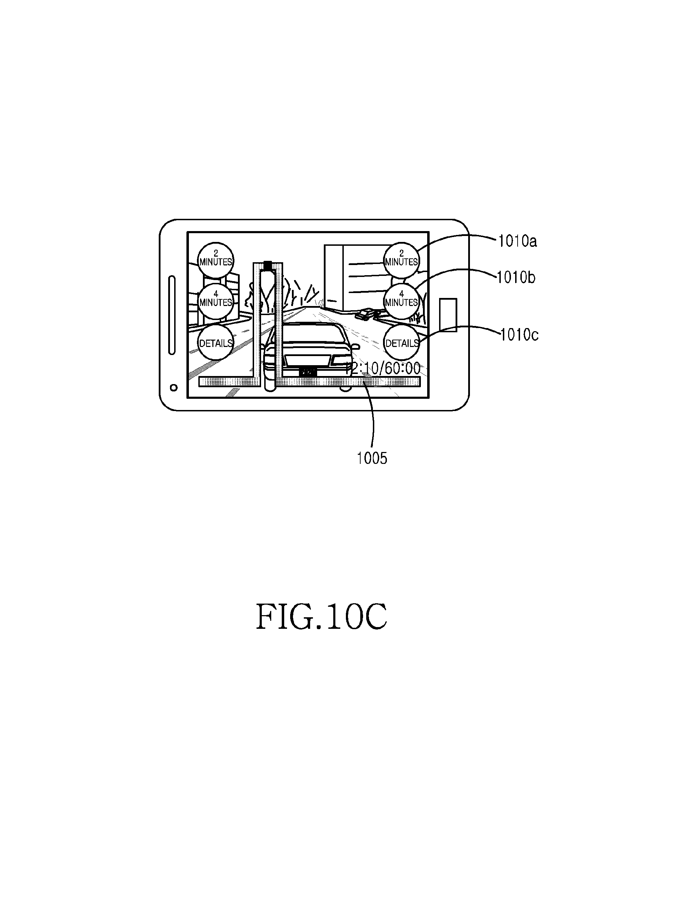

Otherwise, if the sensed drag is held for the specific time period at the specific point, proceeding to block 1011, the electronic device 100 determines a time period of a reshaped duration of the location search bar according to a travel length of the drag. In block 1013, the electronic device 100 can change the shape of the location search bar according to the travel length of the drag, move a search pointer to the specific point, and additionally display the search speed control item. For example, as illustrated in FIG. 10C, the electronic device 100 can change a shape of a duration in which a drag is sensed in the location search bar according to a travel length of the drag, and can display the search speed control item 1010a, 1010b, 1010c such as 2 minutes 1010a, 4 minutes 1010b, details 1010c (user defined), etc., in addition to the location search bar 1005.

In block 1015, the electronic device 100 senses a touch on the search speed control item. In this case, the search time control item implies an item for changing a time period allocated to the reshaped duration or to a time period input by a user.

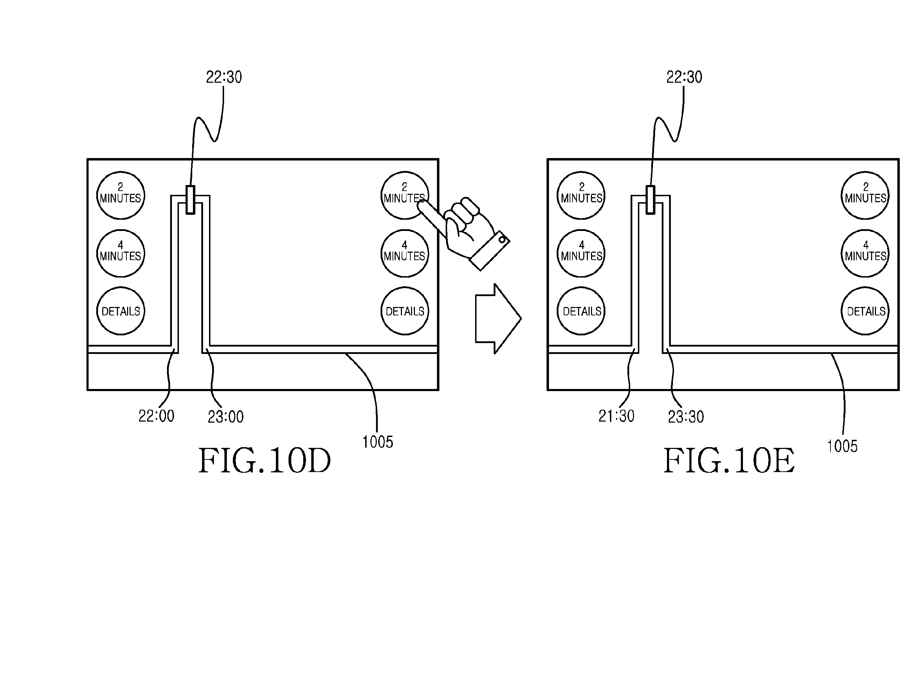

In block 1017, the electronic device 100 changes a time period of a reshaped duration in the location search bar according to the search time control item. For example, as illustrated in FIG. 10D, if a pre-set time period is one minute, the electronic device 100 determines the time period of the reshaped duration as a time between 22'00" and 23'00" corresponding to 30 seconds before/after 22'30" at which a drag is sensed in an orthogonal direction. Thereafter, if a search time speed control item 1010a of 2 minutes is touched, the electronic device 100 changes a time of the reshaped duration to a time between 21'30" and 23'30", as illustrated in FIG. 10E, corresponding to one minute before and after 22'30".

In block 1019, the electronic device 100 determines whether the held drag restarts its movement in the reshaped duration of the location search bar.

If the held drag does not restart its movement in the reshaped duration of the location search bar, proceeding to block 1021, the electronic device 100 senses whether the touch is released. If the touch is released, the procedure of FIG. 10B ends. Otherwise, if the touch is not released, returning to block 1019, the previous process blocks are repeated.

Otherwise, if the held drag restarts its movement in the reshaped duration of the location search bar, proceeding to block 1023, the electronic device 100 confirms whether the drag is moved to the left or the right with respect to a location pointer of the location search bar.

If the drag is moved to the left, proceeding to block 1025, the electronic device 100 moves the playback location in a backward direction according to the drag.

If the drag is moved to the right, proceeding to block 1027, the electronic device 100 moves the playback location in a forward direction according to the drag, and the procedure of FIG. 10B ends.

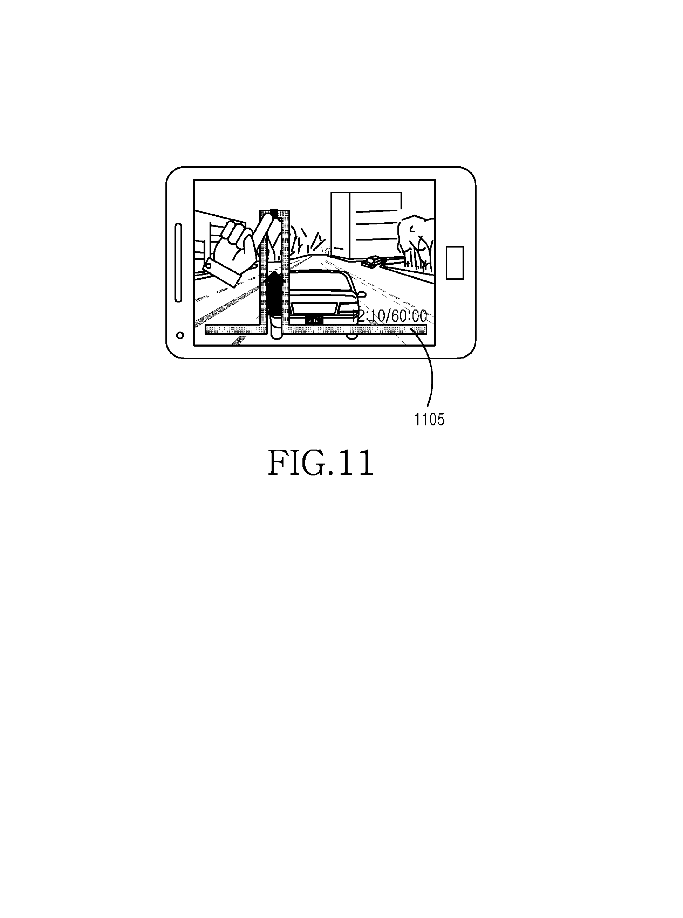

FIG. 11 illustrates an example of changing a location search bar by sensing a drag which is moved by a distance greater than or equal to a threshold distance in the electronic device 100 according to embodiments of the present disclosure.

Referring to FIG. 11, upon sensing of the drag moved by the distance greater than or equal to the threshold distance with respect to a location search bar 1105, the electronic device 100 can display the location search bar by changing a duration of a location at which the drag is sensed according to a pre-set length and shape in a full duration of the location search bar, and can allocate a pre-set time period to the changed duration of the location search bar. For example, if the drag moved by the distance greater than or equal to the threshold distance is sensed at 22'00" of the location search bar, the electronic device 100 can display the location search bar by changing a shape of a corresponding duration such that a duration of the location search bar corresponding to 22'30" has a length corresponding to a 3/4 length of a display device, and can determine a time period of the reshaped duration as a time between 21'30" and 22'30" corresponding to 30 seconds before and after 22'00".

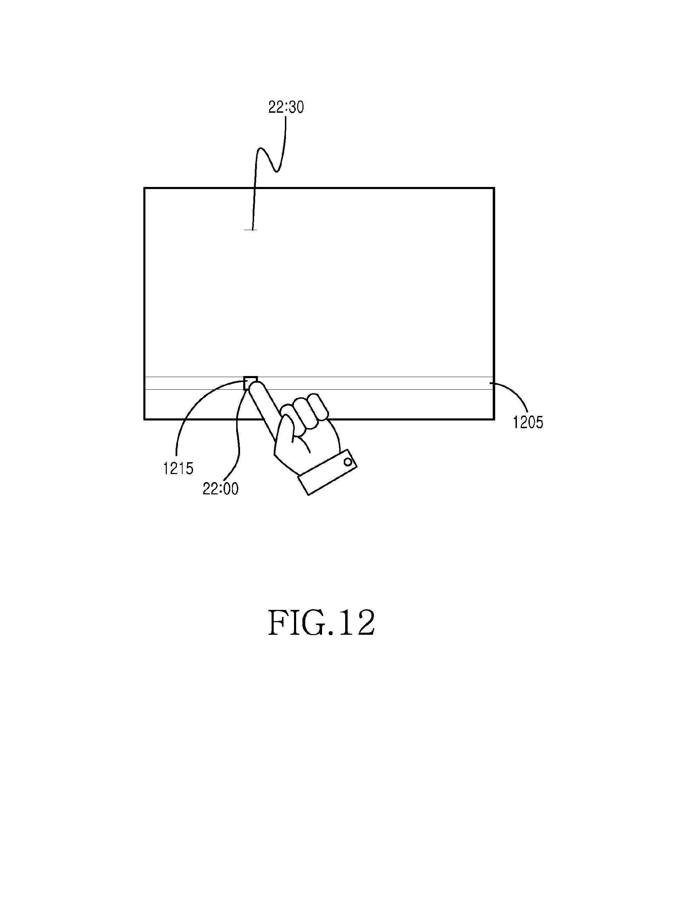

FIG. 12 illustrates an example of changing and displaying a location search bar 1205 when a touch 1215 on the location search bar is maintained for a specific time period in an electronic device according to embodiments of the present disclosure.

Referring to FIG. 12, if a touch 1215 on the location search bar is maintained for a specific time period at 22'00" of the location search bar, the electronic device 100 displays the location search bar by changing a specific duration of the location search bar according to a pre-set length and shape in a state in which a location search point is fixed to a location at which the touch is maintained, and allocates a time period of the reshaped duration from 22'00" to 23'00", that is, one minute later (with a top of the reshaped duration including the 22'30" location on the location search bar 1205). In this case, the electronic device 100 includes at least one of a time after a specific time of a reference time (e.g., 22'00") and a time before the specific time with respect to the time period of the reshaped duration. In addition, a shape of the reshaped location search bar includes a shape capable of moving a location pointer to the left up/down and the right up/down and a shape capable of moving the location pointer to simply the up/down.

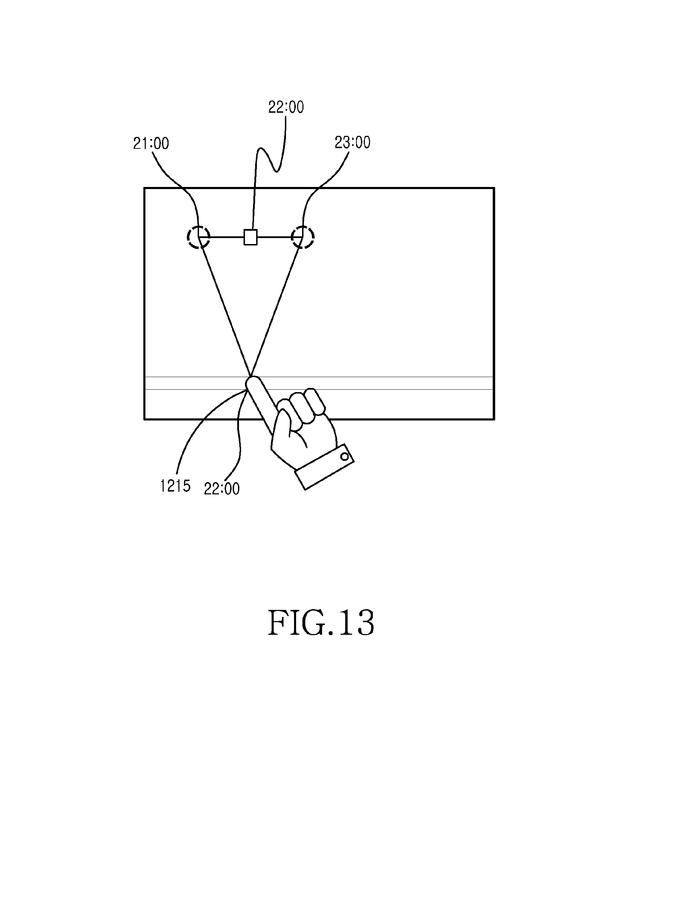

Further, the location search pointer can be displayed at a location at which the touch 1215 is maintained, or can be displayed at any location of the reshaped duration of the location search bar, and as illustrated in FIG. 13, the changed length and shape of the location search bar include all possible lengths and shapes that can be expressed by expanding or extending a specific duration of the location search bar. In this case, a time allocated to the reshaped duration of the location search bar and a location of the location search pointer can be predetermined in a design process or can be changed by a user.

Embodiments and the functional operations of the present disclosure described in this specification can be implemented in computer software, firmware, or hardware, including the structures disclosed in this specification and their structural equivalents, or in combinations of one or more of them. Further, the embodiments of the present disclosure described in this specification can be executed by one or more computer program products, i.e., an electronic device, a data processing device, and the like, or can be implemented in one or more modules of computer program instructions encoded on a computer readable medium for controlling an operation of these devices.

The non-transient computer readable medium can be a machine-readable storage medium, a machine-readable storage substrate, a memory device, a composition of matter effecting a machine-readable propagated stream, or a combination of one or more of them. The term "data processing device" includes, for example, a programmable processor, a computer, or multiple processors or all apparatus, devices, and machines for processing data, including the computer. The apparatus can include, in addition to hardware, code that generates an execution environment for the computer program, e.g., code that constitutes processor firmware, a protocol stack, a database management system, an operating system, or a combination of one or more of them.

While the disclosure has been shown and described with reference to certain embodiments thereof, it will be understood by those skilled in the art that various changes in form and details may be made therein without departing from the spirit and scope of the invention as defined by the appended claims. Therefore, the scope of the invention is defined not by the detailed description but by the appended claims, and all differences within the scope will be construed as being included in the present disclosure.

## Claims

1. A method of searching for a location of a multimedia application of an electronic device, the method comprising:
displaying a location search bar to search for a playback location of the multiple application;
detecting a drag in a direction orthogonal to the location search bar; and
displaying the location search bar corresponding to a duration in which the drag is detected in a full duration of the location search bar by changing a shape of the location search bar.

2. The method of claim 1, wherein the displaying of the location search bar corresponding to the duration in which the drag is detected in the full duration of the location search bar by changing the shape of the location search bar comprises:
determining a travel distance of the drag by confirming whether the drag is held for a specific time period at a specific point;
displaying the location search bar by extending a length of a duration in which the drag is detected in the location search bar according to the travel distance of the drag; and
allocating a pre-set time period to the extended length of the location search bar according to a time of a location at which the drag is detected,
wherein the pre-set time period includes at least one of a previous time period and a next time period which have a pre-set time interval according to the time of the location at which the drag is detected in the location search bar.

3. The method of claim 2, wherein the allocating of the pre-set time period to the extended length of the location search bar according to the time of the location at which the drag is detected comprises: allocating a variable time period to an extended length of the location search bar according to the extended length of the location search bar.

4. The method of claim 2, wherein the allocating of the pre-set time to the extended length of the search bar according the time of the location in which the drag is detected comprises: allocating a fixed time period to the extended length of the location search bar irrespective of the extended length of the location search bar.

5. The method of claim 2, wherein the displaying of the location search bar by extending the length of the duration in which the drag is detected in the location search bar according to the travel distance of the drag comprises:
determining whether the travel distance of the drag is greater than or equal to a threshold distance; and
if the travel distance of the drag is greater than or equal to the threshold distance, displaying the location search bar by changing a shape of the duration in which the drag is detected to a pre-set shape.

6. The method of claim 1, further comprising displaying a playback control item for controlling at least one of a speed and a time which are used to search for a playback location of the multimedia application.

7. The method of claim 6, wherein the displaying of the playback control item for controlling at least one of the speed and the time which are used to search for the playback location of the multimedia application comprises:
when a variable time period is allocated to the extended length of the location search bar, displaying a playback control item for controlling a speed for searching for the playback location of the multimedia application.

8. The method of claim 6, wherein the displaying of the playback control item for controlling at least one of the speed and the time which are used to search for the playback location of the multimedia application comprises: when a fixed time period is allocated to the extended length of the location search bar, displaying a playback control item for controlling a time for searching for the playback location of the multimedia application.

9. The method of claim 1, wherein the displaying of the location search bar corresponding to the duration in which the drag is detected in the full duration of the location search bar by changing the shape of the location search bar comprises: displaying a search pointer of the location search bar in the duration in which the drag is detected.

10. A method of searching for a location of a multimedia application in an electronic device, the method comprising:
displaying a location search bar to search for a playback location of the multiple application;
displaying a playback control item for controlling at least one of a speed and a time which are used to search for the playback location;
detecting a touch on a control item for the multimedia application;
detecting a gesture for moving the location search pointer in a state of maintaining the detected touch; and
moving the search pointer according to the touched control item and the detected gesture.

11. An electronic device for searching for a location of a multimedia application, the electronic device comprising:
one or more processors;
a touch sensing display;
a memory; and
one or more sets of instructions stored in the memory and configured to be executed by the one or more processors,
wherein the sets of instructions include:
an instruction for displaying a location search bar to search for a playback location of the multiple application,
an instruction for detecting a drag in a direction orthogonal to the location search bar, and
an instruction for displaying the location search bar corresponding to a duration in which the drag is detected in a full duration of the location search bar by changing a shape of the location search bar.

12. The electronic device of claim 11, wherein the sets of instructions include:
an instruction for determining a travel distance of the drag by confirming whether the drag is held for a specific time period at a specific point,
an instruction for displaying the location search bar by extending a length of a duration in which the drag is detected in the location search bar according to the travel distance of the drag, and
an instruction for allocating a pre-set time period to the extended length of the location search bar according to a time of a location at which the drag is detected,
wherein the pre-set time period includes at least one of a previous time period and a next time period which have a pre-set time period according to the time of the location at which the drag is detected in the location search bar.

13. The electronic device of claim 12, wherein the sets of instructions include: an instruction for allocating a variable time period to an extended length of the location search bar according to the extended length of the location search bar.

14. The apparatus of claim 11, wherein the apparatus arranged to implement a method of one of claims 4 to 9.

15. An electronic device for searching for a location of a multimedia application, the electronic device comprising:
one or more processors;
a touch sensing display;
a memory; and
one or more sets of instructions stored in the memory and configured to be executed by the one or more processors,
wherein the sets of instructions include:
an instruction for displaying a location search bar to search for a playback location of the multiple application,
an instruction for displaying a playback control item for controlling at least one of a speed and a time which are used to search for a playback location of the multimedia application,
an instruction for detecting a touch on a control item for the multimedia application, for detecting a gesture for moving the location search pointer in a state of maintaining the detected touch, and
an instruction for moving the search pointer according to the touched control item and the detected gesture.
